(19) **Europäisches Patentamt / European Patent Office / Office européen des brevets**

(11) **EP 2 938 147 A1**

(12) **EUROPEAN PATENT APPLICATION**
published in accordance with Art. 153(4) EPC

(43) Date of publication:
28.10.2015 Bulletin 2015/44

(51) Int Cl.:
*H04W 72/04* (2009.01)

(21) Application number: 13871836.6

(22) Date of filing: 18.01.2013

(86) International application number:
PCT/CN2013/070721

(87) International publication number:
WO 2014/110812 (24.07.2014 Gazette 2014/30)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• LV, Yongxia
Shenzhen
Guangdong 518129 (CN)
• ZHANG, Wen
Shenzhen
Guangdong 518129 (CN)
• JI, Tong
Shenzhen
Guangdong 518129 (CN)

(74) Representative: Goddar, Heinz J.
Boehmert & Boehmert
Anwaltspartnerschaft mbB
Patentanwälte Rechtsanwälte
Pettenkoferstrasse 20-22
80336 München (DE)

(54) **INFORMATION TRANSMISSION METHOD AND DEVICE**

(57) Embodiments of the present invention provide a method and device for transmitting information, which can ensure transmission efficiency in a case of a low code rate. The method includes: determining the number of groups M and/or a group size N, where M is an integer greater than 1, and N is an integer greater than 1 or equal to 1; processing, according to M and/or N, an information stream to be grouped to obtain M groups of information streams to be sent; and sending, separately over M different time-frequency resources, the M groups of information streams to be sent, where the number of symbols in each time-frequency resource of the M different time-frequency resources is greater than 4. In a case of a low code rate, by grouping information to be sent, transmission efficiency is ensured in the embodiments of the present invention. In addition, in a manner of sharing a check code or using linear block code encoding, overhead is saved.

Determine the number of groups M and/or a group size N, where the M is an integer greater than 1, and the N is an integer greater than 1 or equal to 1 — 101

Process, according to M and/or N, an information stream to be grouped to obtain M groups of information streams to be sent — 102

Separately send the M groups of information streams to be sent over M different time-frequency resources, where the number of symbols in each time-frequency resource of the M different time-frequency resources is greater than 4 — 103

FIG. 1

EP 2 938 147 A1

**Description**

**TECHNICAL FIELD**

Embodiments of the present invention relate to the field of communications technologies, and in particular, to a method and device for transmitting information.

**BACKGROUND**

As an important part of a new-generation information technology, Internet of Things (Internet of Things, IOT) refers to a network that acquires information about the physical world by deploying various devices having certain capabilities of perception, calculation, execution, and communication, and implements information transmission, coordination, and processing by using the Internet, so as to implement interconnections between a human and a thing, and between things. It is generally believed that a first stage of the Internet of Things is called machine to machine (Machine to Machine, M2M), that is, implementing free communication between machines. For a communications network (such as a mobile cellular network), a communications service that it bears is called machine type communication (Machine Type Communication, MTC).

A Long Term Evolution (Long Term Evolution, LTE) project is a biggest new technical research and development project initiated in recent years by the 3rd Generation Partnership Project (The 3$^{rd}$ Generation Partnership Project, 3GPP). The technology that uses fundamental technologies of orthogonal frequency division multiplexing (Orthogonal Frequency Division Multiplexing, OFDM)/multiple-input multiple-output (Multi-Input Multi-Output, MIMO) can provide downlink 100 Mbps and uplink 50 Mbps peak rates over a spectral bandwidth of 20 MHz, and can improve performance of a cell edge user, enhance cell capacity, and lower a system delay. A performance advantage of the LTE system brings many benefits. With development, an M2M device may combine closely with LTE, and the number of M2M devices may become very huge. By that time, a large amount of random or periodical reported data may be generated probably from various specific applications of an MTC, such as a wireless water meter or electricity meter, a vending machine, or a pos machine.

The 3GPP specifically establishes a project group to research enhancement or optimization of a mobile communications network required by introduction of an MTC device, where a coverage issue is one of key issues concerned by an operator. For example, an important application of an MTC user equipment is a smart meter. Generally speaking, a smart meter is generally installed in a basement of a house, or isolated by using a metal shell. In this case, the MTC device may experience a more severe path loss than a common user equipment, for example, path loss increased by extra 20 dB, that is, coverage is required to increase by at least 20 dB to meet a requirement. According to a table of minimum coupling loss (Minimum coupling loss, MCL) in the 3GPP, it can known that a rate of a physical uplink shared channel (Physical Uplink Share Channel, PUSCH) and that of a physical downlink shared channel (Physical Downlink Share Channel, PDSCH) are both 20 kbps, that is, each 1 ms subframe transmits only 20 bits. However, from a table of modulation and coding scheme (Modulation and Coding Scheme, MCS) and a table of transport block size (Transport Block Size, TBS) in the 3GPP, it can known that a minimum TBS size is 16 bits, that is, for a device that requires coverage compensation, the number of bits transmitted in each TTI may be very likely less than 16 bits; a code rate is further increased if a check code is added, thereby causing deteriorated transmission efficiency.

**SUMMARY**

Embodiments of the present invention provide a method and device for transmitting information, which can ensure transmission efficiency in a case of a low code rate.

In a first aspect, a method for transmitting information is provided and includes: determining the number of groups M and/or a group size N, where the M is an integer greater than 1, and the N is an integer greater than 1 or equal to 1; processing, according to the M and/or the N, an information stream to be grouped to obtain M groups of information streams to be sent; and sending, separately over M different time-frequency resources, the M groups of information streams to be sent, where the number of symbols in each time-frequency resource of the M different time-frequency resources is greater than 4.

With reference to the first aspect, in a first possible implementation manner, the processing, according to the M and/or the N, an information stream to be grouped to obtain M groups of information streams to be sent includes: adding a cyclic redundancy check code behind the information stream to be grouped; encoding the information stream to be grouped to obtain a bit stream, where the information stream to be grouped is added with the cyclic redundancy check code, and the encoding includes Turbo code encoding or convolutional code encoding; dividing the bit stream into M groups of bit streams to be modulated, where a length of the bit stream is C, and a length of each group of bit streams to be modulated is N; and separately modulating the M groups of bit streams to be modulated to obtain M groups of information streams to be sent.

With reference to the first aspect, in a second possible implementation manner, the processing, according to the M and/or the N, an information stream to be grouped to obtain M groups of information streams to be sent includes: adding a cyclic redundancy check code behind the information stream to be grouped; encoding the information stream to be grouped to obtain a bit stream, where the information stream to be grouped is added with the cyclic redundancy check code, and the encoding includes Turbo code encoding or convolutional code encoding; modulating the bit stream to obtain a symbol stream; and dividing the bit stream into M groups of information streams to be sent, where a length of the symbol stream is C, and a length of each group of information streams to be sent is N.

With reference to the first aspect, in a third possible implementation manner, the processing, according to the M and/or the N, an information stream to be grouped to obtain M groups of information streams to be sent includes: dividing the information stream to be grouped into M groups of information streams to be encoded, where a length of the information stream to be grouped is C, and a length of each group of information streams to be encoded is N; separately performing linear block code encoding on the M groups of information streams to be encoded to obtain M groups of bit streams; and separately modulating the M groups of bit streams to obtain M groups of information streams to be sent.

With reference to the first aspect, in a fourth possible implementation manner, the processing, according to the M and/or the N, an information stream to be grouped to obtain M groups of information streams to be sent includes: dividing the information stream to be grouped into M groups of information streams to be encoded, where a length of the information stream to be grouped is C, a length of each group of information streams to be encoded is N, and the information stream to be grouped includes high-level check information; encoding the M groups of information streams to be encoded to obtain M bit streams, where the encoding includes Turbo encoding, convolutional code encoding, or linear block code encoding; and modulating the M groups of bit streams to obtain M groups of information streams to be sent.

With reference to the first aspect, in a fifth possible implementation manner, the processing, according to the M and/or the N, an information stream to be grouped to obtain M groups of information streams to be sent includes: encoding the information stream to be grouped to obtain a bit stream, where the encoding includes Turbo encoding, convolutional code encoding, or linear block code encoding, and the information stream to be grouped includes high-level check information; dividing the bit stream into M groups of bit streams to be modulated, where a length of the bit stream is C, and a length of each group of bit streams to be modulated is N; and modulating the M groups of bit streams to be modulated to obtain M groups of information streams to be sent.

With reference to the first aspect, in a sixth possible implementation manner, the processing, according to the M and/or the N, an information stream to be grouped to obtain M groups of information streams to be sent includes: encoding the information stream to be grouped to obtain a bit stream, where the encoding includes Turbo encoding, convolutional code encoding, or linear block code encoding, and the information stream to be grouped includes high-level check information; modulating the bit stream to obtain a symbol stream; and dividing the symbol stream into M groups of information streams to be sent, where a length of the symbol stream is C, and a length of each group of information streams to be sent is N.

With reference to the first aspect or any one of the foregoing possible implementation manners, in a seventh possible implementation manner, the determining the number of groups M and/or a group size N includes: locally acquiring the preset number of the groups M and/or the group size N; or externally receiving the number of the groups M and/or the group size N.

With reference to the first aspect or any one of the foregoing possible implementation manners, in an eighth possible implementation manner, the determining the number of groups M and/or a group size N includes: determining the M according to the N and the C, or determining the N according to the M and the C:

$$ M = \left\lceil \frac{C}{N} \right\rceil \text{ or } N = \left\lceil \frac{C}{M} \right\rceil $$

where the C and N are in units of bits, or the C and N are in units of symbols, and $\lceil \ \rceil$ is a round-up operation.

With reference to the first aspect or the seventh possible implementation manner of the first aspect, in a ninth possible implementation manner, the externally receiving the number of the groups M and/or the group size N includes: externally receiving a resource allocation message, where the resource allocation message is used to configure a time-frequency resource occupied by each group of the M groups of information streams to be sent.

With reference to the first aspect or the ninth possible implementation manner of the first aspect, in a tenth possible implementation manner, the resource allocation message includes at least one of the following items: the number of the groups M, the group size N, a time-domain size of the time-frequency resource occupied by each group,

the number of resource blocks RBs and a modulation and coding scheme MCS, and the number of RBs and a transport block size TBS.

With reference to the first aspect, in an eleventh possible implementation manner, the sending, separately over M different time-frequency resources, the M groups of information streams to be sent includes: receiving, after a first group of the M groups of information streams to be sent is successfully sent, acknowledgment information sent by a base station, where the acknowledgment information is used to instruct that a current channel continues to be occupied in subsequent transmission.

With reference to the first aspect, in a twelfth possible implementation manner, the following is further included: receiving feedback for the M groups of information streams to be sent, or receiving feedback for each group of information streams to be sent.

In a second aspect, a method for receiving information is provided and includes: receiving M groups of symbol streams separately over M different time-frequency resources, where the number of symbols in each time-frequency resource of the M different time-frequency resources is greater than 4, and the M is an integer greater than 1; and processing the M groups of symbol streams to obtain an original information stream.

With reference to the second aspect, in a first possible implementation manner, the processing the M groups of symbol streams to obtain an original information stream includes: separately demodulating the M groups of symbol streams to obtain M groups of bit streams, where a length of the bit streams is C, and a length of each group of bit streams is N; merging the M groups of bit streams into a bit stream to be decoded; decoding the bit stream to be decoded to obtain the original information stream, where the decoding includes Turbo code decoding or convolutional code decoding; and checking the original information stream.

With reference to the second aspect, in a second possible implementation manner, the processing the M groups of symbol streams to obtain an original information stream includes: merging the M groups of symbol streams into a symbol stream to be demodulated, where a length of the symbol stream to be demodulated is C, and a length of each group of symbol streams is N; demodulating the symbol stream to be demodulated to obtain a bit stream to be decoded; decoding the bit stream to be decoded to obtain the original information stream, where the decoding includes Turbo code decoding or convolutional code decoding; and checking the original information stream.

With reference to the second aspect, in a third possible implementation manner, the processing the M groups of symbol streams to obtain an original information stream includes: separately demodulating the M groups of symbol streams to obtain M groups of bit streams to be decoded; separately performing linear block code decoding on the M groups of bit streams to be decoded to obtain M groups of bit streams; merging the M groups of bit streams into the original information stream, where a length of the original information stream is C, and a length of each group of bit streams is N; and checking the original information stream.

With reference to the second aspect or the first and the second possible implementation manners of the second aspect, in a fourth possible implementation manner, the checking the original information stream includes: cyclic redundancy check or high-level check information check; and the decoding further includes: linear block code decoding.

With reference to the second aspect or any one of the foregoing possible implementation manners, in a fifth possible implementation manner, determining the number of groups M and/or a group size N is further included, including: determining the M according to the N and the C, or determining the N according to the M and the C:

$$M = \left\lceil \frac{C}{N} \right\rceil_{\text{or}} \quad N = \left\lceil \frac{C}{M} \right\rceil$$

where the C and N are in units of bits, or the C and N are in units of symbols, the N is an integer greater than 1 or equal to 1, and $\lceil \ \rceil$ is a round-up operation.

With reference to the second aspect or the fifth possible implementation manner of the second aspect, in a sixth possible implementation manner, the following is further included: determining and sending a resource allocation message, where the resource allocation message is used to configure a time-frequency resource occupied by each group of the M groups of symbol streams.

With reference to the second aspect or the sixth possible implementation manner of the second aspect, in a seventh possible implementation manner, the resource allocation message includes at least one of the following items: the number of the groups M, the group size N, a time-domain size of the time-frequency resource occupied by each group, the number of resource blocks RBs and a modulation and coding scheme MCS, and the number of RBs and a transport block size TBS.

With reference to the second aspect, in an eighth possible implementation manner, the receiving M groups of symbol streams separately over M different time-frequency resources includes: sending acknowledgment information to a user equipment after a first group of the M groups of symbol streams is successfully received, where the acknowledgment information is used to instruct that a current channel continues to be occupied in subsequent transmission.

With reference to the second aspect, in a ninth possible implementation manner, the following is further included: sending feedback for the M groups of symbol streams; or sending feedback for each group of symbol streams.

In a third aspect, a device for sending information is provided and includes: a determining unit, configured to determine the number of groups M and/or a group size N, where the M is an integer greater than 1, and the N is an integer greater than 1 or equal to 1; a processing unit, configured to process, according to the M and/or the N, an information stream to be grouped to obtain M groups of information streams to be sent; and a sending unit, configured to send, separately over M different time-frequency resources, the M groups of information streams to be sent, where the number of symbols in each time-frequency resource of the M different time-frequency resources is greater than 4.

With reference to the third aspect, in a first possible implementation manner, the device for sending information further includes an encoding unit and a modulation unit, and the processing unit is specifically configured to: add a cyclic redundancy check code behind the information stream to be grouped; encode, by using the encoding unit, the information stream to be grouped to obtain a bit stream, where the information stream to be grouped is added with the cyclic redundancy check code, and the encoding unit includes Turbo code encoding or convolutional code encoding; divide the bit stream into M groups of bit streams to be modulated, where a length of the bit stream is C, and a length of each group of bit streams to be modulated is N; and separately modulate, by using the modulation unit, the M groups of bit streams to be modulated to obtain M groups of information streams to be sent.

With reference to the third aspect, in a second possible implementation manner, the device for sending information further includes an encoding unit and a modulation unit, and the processing unit is specifically configured to: add a cyclic redundancy check code behind the information stream to be grouped; encode, by using the encoding unit, the information stream to be grouped to obtain a bit stream, where the information stream is added with the cyclic redundancy check code, and the encoding includes Turbo code encoding or convolutional code encoding; modulate the bit stream by using the modulation unit to obtain a symbol stream; and divide the symbol stream into M groups of information streams to be sent, where a length of the symbol stream is C, and a length of each group of information streams to be sent is N.

With reference to the third aspect, in a third possible implementation manner, the device for sending information further includes an encoding unit and a modulation unit, and the processing unit is specifically configured to: divide the information stream to be grouped into M groups of information streams to be encoded, where a length of the information stream to be grouped is C, and a length of each group of information streams to be encoded is N; separately perform, by using the encoding unit, linear bock code encoding on the M groups of information streams to be encoded to obtain M groups of bit streams; and separately modulate the M groups of bit streams by using the modulation unit to obtain M groups of information streams to be sent.

With reference to the third aspect, in a fourth possible implementation manner, the device for sending information further includes an encoding unit and a modulation unit, and the processing unit is specifically configured to: divide the information stream to be grouped into M groups of information streams to be encoded, where a length of the information stream to be grouped is C, a length of each group of information streams to be encoded is N, and the information stream to be grouped includes high-level check information; encode, by using the encoding unit, the M groups of information streams to be encoded to obtain M bit streams, where the encoding includes Turbo encoding, convolutional code encoding, or linear block code encoding; and modulate the M groups of bit streams by using the modulation unit to obtain M groups of information streams to be sent.

With reference to the third aspect, in a fifth possible implementation manner, the device for sending information further includes an encoding unit and a modulation unit, and the processing unit is specifically configured to: encode, by using the encoding unit, the information stream to be grouped to obtain a bit stream, where the encoding includes Turbo encoding, convolutional code encoding, or linear block code encoding, and the information stream to be grouped includes high-level check information; divide the bit stream into M groups of bit streams to be modulated, where a length of the bit stream is C, and a length of each group of bit streams to be modulated is N; and modulate, by using the modulation unit, the M groups of bit streams to be modulated to obtain M groups of information streams to be sent.

With reference to the third aspect, in a sixth possible implementation manner, the device for sending information further includes an encoding unit and a modulation unit, and the processing unit is specifically configured to: encode, by using the encoding unit, the information stream to be grouped to obtain a bit stream, where the encoding includes Turbo encoding, convolutional code encoding, or linear block code encoding, and the information stream to be grouped includes high-level check information; modulate the bit stream by using the modulation unit to obtain a symbol stream; and divide the symbol stream into M groups of information streams to be sent, where a length of the symbol stream is C, and a length of each group of information streams to be sent is N.

With reference to the third aspect or any one of the foregoing possible implementation manners, in a seventh possible implementation manner, the device for sending information further includes a receiving unit, and the determining unit is specifically configured to: locally acquire the preset number of the groups M and/or the group size N; or externally receive the number of the groups M and/or the group size N by using the receiving unit.

With reference to the third aspect or any one of the foregoing possible implementation manners, in an eighth possible implementation manner, the determining unit is specifically configured to: determine the M according to the N and the C, or determine the N according to the M and the C:

$$M = \left\lceil \frac{C}{N} \right\rceil \text{ or } N = \left\lceil \frac{C}{M} \right\rceil$$

where the C and N are in units of bits, or the C and N are in units of symbols, and $\lceil\ \rceil$ is a round-up operation.

With reference to the third aspect or the seventh possible implementation manner of the third aspect, in a ninth possible implementation manner, the receiving unit is specifically configured to: externally receive a resource allocation message, where the resource allocation message is used to configure a time-frequency resource occupied by each group of the M groups of information streams to be sent.

With reference to the third aspect or the ninth possible implementation manner of the third aspect, in a tenth possible implementation manner, the resource allocation message includes at least one of the following items: the number of the groups M, the group size N, a time-domain size of the time-frequency resource occupied by each group, the number of resource blocks RBs and a modulation and coding scheme MCS, and the number of RBs and a transport block size TBS.

With reference to the third aspect, in an eleventh possible implementation manner, the receiving unit is specifically configured to: receive acknowledgment information sent by a base station after a first group of the M groups of information streams to be sent is successfully sent, where the acknowledgment information is used to instruct that a current channel continues to be occupied in subsequent transmission.

With reference to the first aspect, in a twelfth possible implementation manner, the receiving unit is further configured to:

receive feedback for the M groups of information streams to be sent; or,
receive feedback for each group of information streams to be sent.

In a fourth aspect, a device for receiving information is provided and includes: a receiving unit, configured to receive M groups of symbol streams separately over M different time-frequency resources, where the number of symbols in each time-frequency resource of the M different time-frequency resources is greater than 4, and the M is an integer greater than 1; and a processing unit, configured to process the M groups of symbol streams to obtain an original information stream.

With reference to the fourth aspect, in a first possible implementation manner, the device for receiving information further includes a demodulation unit and a decoding unit, and the processing unit is specifically configured to: separately demodulate the M groups of symbol streams by using the demodulation unit to obtain M groups of bit streams, where a length of the bit streams is C, and a length of each group of bit streams is N; merge the M groups of bit streams into a bit stream to be decoded; decode, by using the decoding unit, the bit stream to be decoded to obtain the original information stream, where the decoding includes Turbo code decoding or convolutional code decoding; and check the original information stream.

With reference to the fourth aspect, in a second possible implementation manner, the device for receiving information further includes a demodulation unit and a decoding unit, and the processing unit is specifically configured to: merge the M groups of symbol streams into a symbol stream to be demodulated, where a length of the symbol stream to be demodulated is C, and a length of each group of symbol streams is N; demodulate, by using the demodulation unit, the symbol stream to be demodulated to obtain a bit stream to be decoded; decode, by using the decoding unit, the bit stream to be decoded to obtain the original information stream, where the decoding includes Turbo code decoding or convolutional code decoding; and check the original information stream.

With reference to the fourth aspect, in a third possible implementation manner, the device for receiving information further includes a demodulation unit and a decoding unit, and the processing unit is specifically configured to: separately demodulate the M groups of symbol streams by using the demodulation unit to obtain M groups of bit streams to be decoded; separately perform, by using the decoding unit, linear block code decoding on the M groups of bit streams to be decoded to obtain M groups of bit streams; merge the M groups of bit streams into the original information stream, where a length of the original information stream is C, and a length of each group of bit streams is N; and check the original information stream.

With reference to the fourth aspect or the first and the second possible implementation manners of the fourth aspect, in a fourth possible implementation manner, the checking the original information stream includes: cyclic redundancy check or high-level check information check; and the decoding further includes: linear block code decoding.

With reference to the fourth aspect or any one of the foregoing possible implementation manners, in a fifth possible implementation manner, the device for receiving information further includes a determining unit, where the determining unit is specifically configured to: determine the M according to the N and the C, or determine the N according to the M and the C:

$$M = \left\lceil \frac{C}{N} \right\rceil \text{ or } N = \left\lceil \frac{C}{M} \right\rceil$$

where the C and N are in units of bits, or the C and N are in units of symbols, N is an integer greater than 1 or equal to 1, and $\lceil \ \rceil$ is a round-up operation.

With reference to the fourth aspect or the fifth possible implementation manner of the fourth aspect, in a sixth possible implementation manner, the device for receiving information further includes a sending unit, configured to: determine a resource allocation message by using the determining unit and send the resource allocation message, where the resource allocation message is used to configure a time-frequency resource occupied by each group of the M groups of symbol streams.

With reference to the fourth aspect or the sixth possible implementation manner of the fourth aspect, in a seventh possible implementation manner, the resource allocation message includes at least one of the following items: the number of the groups M, the group size N, a time-domain size of the time-frequency resource occupied by each group, the number of resource blocks RBs and a modulation and coding scheme MCS, and the number of RBs and a transport block size TBS.

With reference to the fourth aspect, in an eighth possible implementation manner, the sending unit is further configured to: send acknowledgment information to a user equipment after a first group of the M groups of symbol streams is successfully received, where the acknowledgment information is used to instruct that a current channel continues to be occupied in subsequent transmission.

With reference to the fourth aspect, in a ninth possible implementation manner, the sending unit is further configured to: send feedback for the M groups of symbol streams; or send feedback for each group of symbol streams.

Based on the foregoing technical solutions, in a case of a low code rate, by grouping information to be sent, transmission efficiency and transmission quality are ensured in the embodiments of the present invention.

## BRIEF DESCRIPTION OF DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and a person of ordinary skill in the art may still derive other drawings from these accompanying drawings without creative efforts.

FIG. 1 is a flowchart of a method for sending information according to an embodiment of the present invention;
FIG. 2 is a flowchart of a method for sending information according to another embodiment of the present invention;
FIG. 3 is a flowchart of a method for sending information according to another embodiment of the present invention;
FIG. 4 is a flowchart of a method for sending information according to another embodiment of the present invention;
FIG 5 is a flowchart of a method for receiving information according to an embodiment of the present invention;
FIG. 6 is a schematic block diagram of a device for sending information according to an embodiment of the present invention;
FIG. 7 is a schematic block diagram of a device for receiving information according to an embodiment of the present invention;
FIG 8 is a schematic block diagram of a device for sending information according to another embodiment of the present invention; and
FIG. 9 is a schematic block diagram of a device for receiving information according to another embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

The technical solutions of the present invention may be applied to various communications systems, such as a Global System for Mobile Communications (Global System of Mobile communication, GSM), a Code Division Multiple Access (Code Division Multiple Access, CDMA) system, Wideband Code Division Multiple Access (Wideband Code Division Multiple Access Wireless, WCDMA), General Packet Radio Service (General Packet Radio Service, GPRS), and Long Term Evolution (Long Term Evolution, LTE).

A user equipment (User Equipment, UE) may also be called a mobile terminal (Mobile Terminal), a mobile user equipment, or the like. It is capable of communicating with one or more core networks by using a radio access network (for example, Radio Access Network, RAN). The user equipment may be a mobile terminal, such as a mobile phone (or called a "cellular" phone) and a computer having a mobile terminal, for example, may be a portable, pocket-sized, handheld, computer-embedded, or vehicle-mounted mobile apparatus, which exchanges languages and/or data with the radio access network.

A base station may be a GSM or CDMA base transceiver station (Base Transceiver Station, BTS), a WCDMA base station (NodeB), or an LTE evolved base station (eNB, or evolutional Node B, e-NodeB), which is not limited in the present invention.

In the technical solutions of the present invention, for ease of description, a UE is used as a device for sending information, and a base station is used as a device for receiving information. It should be understood that the device for sending information and the device for receiving information may be any two machine-to-machine (Machine to Machine, M2M) devices performing machine-type communication (Machine Type Communication, MTC), or may be a base station and a user equipment, where the user equipment may be an M2M terminal, which is not limited in the present invention.

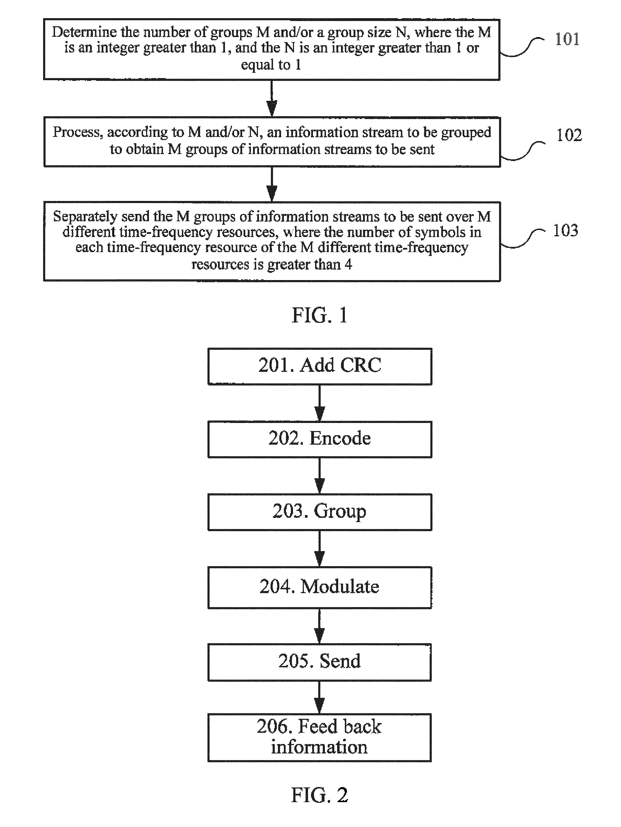

FIG. 1 is a flowchart of a method for sending information according to an embodiment of the present invention.

101. Determine the number of groups M and/or a group size N, where the M is an integer greater than 1, and the N is an integer greater than 1 or equal to 1.

A UE may locally acquire the preset number of the groups M and/or the group size N, or may receive the number of the groups M and/or the group size N from an external device (from a serving base station); and a length of information to be sent is C. M may be determined according to N and C, or N may be determined according to M and C:

$$M = \left\lceil \frac{C}{N} \right\rceil \text{ or } N = \left\lceil \frac{C}{M} \right\rceil$$

where the C and N are in units of bits, or the C and N are in units of symbols, and $\lceil \ \rceil$ is a round-up operation.

102. Process, according to M and/or N, an information stream to be grouped to obtain M groups of information streams to be sent.

The processing may include adding a check code, encoding, modulating, and grouping. A specific sequence and a combination are described in an embodiment. For a grouping process, grouping may be performed according to a relational expression between M, N, and C in step 101, according to M only, according to N only, or according to M and N.

103. Separately send the M groups of information streams to be sent over M different time-frequency resources, where the number of symbols in each time-frequency resource of the M different time-frequency resources is greater than 4.

Sending of the M groups of information streams to be sent may be based on scheduling, or may be based on contention. In a scheduling-based case, a base station needs to deliver configuration information to configure a time-frequency resource. The number of OFDM symbols in each time-frequency resource is greater than 4, and a greater number of OFDM symbols included in a unit time-domain resource indicates wider coverage.

Based on the foregoing technical solution, in a case of a low code rate, by grouping information to be sent, transmission efficiency is ensured in this embodiment of the present invention.

Optionally, as an embodiment, in step 102, the processing an information stream to be grouped may include: adding a cyclic redundancy check code behind the information stream to be grouped; encoding the information stream to be grouped to obtain a bit stream, where the information stream to be grouped is added with the cyclic redundancy check code, and the encoding includes Turbo code encoding or convolutional code encoding; dividing the bit stream into M groups of bit streams to be modulated, where a length of the bit stream is C, and a length of each group of bit streams to be modulated is N; and separately modulating the M groups of bit streams to be modulated to obtain M groups of information streams to be sent.

Optionally, as another embodiment, in step 102, the processing an information stream to be grouped may include: adding a cyclic redundancy check code behind the information stream to be grouped; encoding the information stream to be grouped to obtain a bit stream, where the information stream to be grouped is added with the cyclic redundancy check code, and the encoding includes Turbo code encoding or convolutional code encoding; modulating the bit stream to obtain a symbol stream; and dividing the symbol stream into M groups of information streams to be sent, where a length of the symbol stream is C, and a length of each group of information streams to be sent is N.

Optionally, as another embodiment, in step 102, the processing an information stream to be grouped may include: dividing the information stream to be grouped into M groups of information streams to be encoded, where a length of the information stream to be grouped is C, and a length of each group of information streams to be encoded is N; performing linear block code encoding on the M groups of information streams to be encoded to obtain M groups of bit streams; and separately modulating the M groups of bit streams to obtain M groups of information streams to be sent.

Optionally, as another embodiment, in step 102, the processing an information stream to be grouped may include: dividing the information stream to be grouped into M groups of information streams to be encoded, where a length of the information stream to be grouped is C, a length of each group of information streams to be encoded is N, and the information stream to be grouped includes high-level check information; encoding the M groups of information streams to be encoded to obtain M bit streams, where the encoding includes Turbo encoding, convolutional code encoding, or linear block code encoding; and modulating the M groups of bit streams to obtain M groups of information streams to be sent.

Optionally, as another embodiment, in step 102, the processing an information stream to be grouped may include: encoding the information stream to be grouped to obtain a bit stream, where the encoding includes Turbo encoding, convolutional code encoding, or linear block code encoding, and the information stream to be grouped includes high-level check information; dividing the bit stream into M groups of bit streams to be modulated, where a length of the bit stream is C, and a length of each group of bit streams to be modulated is N; and modulating the M groups of bit streams to be modulated to obtain M groups of information streams to be sent.

Optionally, as another embodiment, in step 102, the processing an information stream to be grouped may include: encoding the information stream to be grouped to obtain a bit stream, where the encoding includes Turbo encoding, convolutional code encoding, or linear block code encoding, and the information stream to be grouped includes high-level check information; modulating the bit stream to obtain a symbol stream; and dividing the symbol stream into M groups of information streams to be sent, where a length of the symbol stream is C, and a length of each group of information streams to be sent is N.

Optionally, as another embodiment, in a scheduling-based case, a resource allocation message may be received externally, where the resource allocation message is used to configure a time-frequency resource occupied by each group of the M groups of information streams to be sent. The resource allocation message includes at least one of the following items: the number of groups M, a group size N, a time-domain size of the time-frequency resource occupied by each group, the number of resource blocks RBs and a modulation and coding scheme MCS, and the number of RBs and a transport block size TBS.

Optionally, as another embodiment, in a contention-based case, after a first group of the M groups of information streams to be sent is successfully sent, acknowledgment information sent by a base station is received, where the acknowledgment information is used to instruct that a current channel continues to be occupied in subsequent transmission.

Optionally, as another embodiment, a UE may receive feedback for the M groups of information streams to be sent, or receive feedback for each group of information streams to be sent.

Therefore, in a case of a low code rate, by grouping an information stream to be sent, and transmission efficiency is ensured in this embodiment of the present invention. In addition, in a manner of sharing a check code or using linear block code encoding, overhead is saved, and simultaneously coverage is improved.

FIG. 2 is a flowchart of a method for sending information according to another embodiment of the present invention. FIG 2 is a specific embodiment of FIG. 1.

201. Add cyclic redundancy check CRC.

A sender needs to send an information stream $a_0, a_1, a_2, a_3, ..., a_{A-1}$ at a physical layer, where a length of the information stream is A. First, one CRC needs to be added to the information stream, so that the information stream becomes $b_0, b_1, b_2, b_3, ..., b_{B-1}$, and a length of the information stream added with the CRC is B. That is, $B = A+L$, where L is a length of the CRC, and CRC check bits may be $p_0, p_1, P_2, P_3, ..., P_{L-1}$. Generally, $L = 8, 16, 24$. The CRC is generated by using the following polynomials, where D is a symbol, and $D^3$ represents a cubic term:

when $L = 24$, polynomials are as follows:

$$g_{CRC24A}(D) = \left[ D^{24} + D^{23} + D^{18} + D^{17} + D^{14} + D^{11} + D^{10} + D^7 + D^6 + D^5 + D^4 + D^3 + D + 1 \right]$$

$$g_{\text{CRC24B}}(D) = \left[ D^{24} + D^{23} + D^6 + D^5 + D + 1 \right]$$

when L= 16, a polynomial is as follows:

$$g_{\text{CRC16}}(D) = \left[ D^{16} + D^{12} + D^5 + 1 \right]$$

when L = 8, a polynomial is as follows:

$$g_{\text{CRC8}}(D) = \left[ D^8 + D^7 + D^4 + D^3 + D + 1 \right]$$

where $p_0, p_1, p_2, p_3,...,p_{L-1}$ meets the following equations:

a remainder of $a_0 D^{A+23} + a_1 D^{A+22} +...+ a_{A-1}D^{24} + p_0 D^{23} + p_1 D^{23} +...+ p_{22}D^1 + p_{23}$ divided by the polynomial $g_{\text{CRC24A}}(D)$ or $g_{\text{CRC24B}}(D)$ when L = 24 is 0;
a remainder of $a_0 D^{A+15} + a_1 D^{A+14} +...+ a_{A-1}D^{16} + p_0 D^{15} + p_1 D^{14}+...+ p_{14}D^1 + p_{15}$ divided by the polynomial $g_{\text{CRC24A}}(D)$ or $g_{\text{CRC24B}}(D)$ when L = 16 is 0; and
a remainder of $a_0 D^{A+7} + a_1 D^{A+6} +...+ a_{A-1}D^8 + p_0 D^7 + p_1 D^6 +...+ p_6 D^1 + p_7$ divided by the polynomial $g_{\text{CRC24}}(D)$ or $g_{\text{CRC24B}}(D)$ when L = 8 is 0;
where a relationship between $a_k$ and $b_k$ is:

$$b_k = a_k$$

where $k = 0,1,2, ..., A$-1

$$b_k = p_{k-A}$$

where $k=A,A+1,A+2,...,A+L$-1

202. Perform encoding.

The information stream added with the CRC is encoded by using an encoder, where the encoder may be a Turbo encoder, such as a 1/3 Turbo encoder, or a convolutional code encoder, such as a 1/3 convolutional code encoder.

203. Perform grouping.

First, the number of groups M or a group size N needs to be determined, or both M and N need to be determined. Specifically, M and N may be preset values, may be directly acquired by a UE locally, or a base station may notify the UE of M and N by using signaling. A length of a bit stream after the encoding in step 202 is C. The number of the groups M, the group size N, and C meet the following relationship:

$$M = \left\lceil \frac{C}{N} \right\rceil \quad \text{or} \quad N = \left\lceil \frac{C}{M} \right\rceil$$

In this embodiment, an information stream to be grouped is an encoded bit stream, and therefore the C and N are in units of bits; and $\lceil \ \rceil$ is a round-up operation. According to the foregoing relational expression, N may be determined according to M and C; or M may be determined according to N and C. C is known, that is, the bit stream may be grouped by acquiring either M or N. The number of bits included in each group is N, where N is divisible by a modulation order so that modulation can be performed in the next step.

204. Perform modulation.

A modulation scheme may be predefined, or the base station may notify the UE of the modulation scheme by using signaling. Table 1 lists part of correspondence between a modulation and coding scheme index $I_{MCS}$, a modulation order $Q_m$, and a transport block index $I_{TBS}$ of a data channel. The UE may learn the modulation and coding scheme index $I_{MCS}$ from downlink control information (Downlink Control Information, DCI) delivered by the base station, and may determine the modulation scheme, the modulation order $Q_m$, and the transport block index $I_{TBS}$ by querying the table.

**Table 1: MCS**

| Modulation and Coding Scheme Index $I_{MCS}$ | Modulation Order $Q_m$ | Transport Block Index $I_{TBS}$ |
|---|---|---|
| 0 | 2 | 0 |
| 1 | 2 | 1 |
| 2 | 2 | 2 |
| 3 | 2 | 3 |
| 4 | 2 | 4 |
| 5 | 2 | 5 |
| 6 | 2 | 6 |
| 7 | 2 | 7 |
| 8 | 2 | 8 |
| 9 | 2 | 9 |
| 10 | 4 | 9 |
| 11 | 4 | 10 |
| 12 | 4 | 11 |
| 13 | 4 | 12 |
| 14 | 4 | 13 |
| 15 | 4 | 14 |
| 16 | 4 | 15 |
| 17 | 6 | 15 |
| 18 | 6 | 16 |
| 19 | 6 | 17 |
| 20 | 6 | 18 |

For example, it is assumed that the base station notifies that the coding scheme index $I_{MCS}$ is 4, it is known by querying the table that QPSK2 modulation is used, and the transport block index $I_{TBS}$ is 4 and may further be used to query a TBS table to obtain a transport block size.

The following lists part of a table of correspondence between the transport block size, the number of physical resource blocks $N_{PRB}$, and the transport block index $I_{TBS}$:

**Table 2: TBS table**

| $I_{TBS}$ | The Number of Physical Resource Blocks $N_{PRB}$ | | | | | | | | | |
|---|---|---|---|---|---|---|---|---|---|---|
| | 1 | 2 | 3 | 4 | 5 | 6 | 7 | 8 | 9 | 10 |
| 0 | 16 | 32 | 56 | 88 | 120 | 152 | 176 | 208 | 224 | 256 |
| 1 | 24 | 56 | 88 | 144 | 176 | 208 | 224 | 256 | 328 | 344 |
| 2 | 32 | 72 | 144 | 176 | 208 | 256 | 296 | 328 | 376 | 424 |

(continued)

| $I_{TBS}$ | The Number of Physical Resource Blocks $N_{PRB}$ | | | | | | | | | |
|---|---|---|---|---|---|---|---|---|---|---|
| | 1 | 2 | 3 | 4 | 5 | 6 | 7 | 8 | 9 | 10 |
| 3 | 40 | 104 | 176 | 208 | 256 | 328 | 392 | 440 | 504 | 568 |
| 4 | 56 | 120 | 208 | 256 | 328 | 408 | 488 | 552 | 632 | 696 |
| 5 | 72 | 144 | 224 | 328 | 424 | 504 | 600 | 680 | 776 | 872 |
| 6 | 328 | 176 | 256 | 392 | 504 | 600 | 712 | 808 | 936 | 1032 |
| 7 | 104 | 224 | 328 | 472 | 584 | 712 | 840 | 968 | 1096 | 1224 |
| 8 | 120 | 256 | 392 | 536 | 680 | 808 | 968 | 1096 | 1256 | 1384 |
| 9 | 136 | 296 | 456 | 616 | 776 | 936 | 1096 | 1256 | 1416 | 1544 |
| 10 | 144 | 328 | 504 | 680 | 872 | 1032 | 1224 | 1384 | 1544 | 1736 |

According to the transport block index $I_{TBS}$ queried from Table 1 and the number of physical resource blocks $N_{PRB}$ acquired by using the DCI, a corresponding transport block size TBS may be known.

The following describes an example of step 201 to step 204. It is assumed that a length of an original information stream is 136 bits; a 24-bit CRC is added after the information stream to form a bit stream of 160 bits; and then, the bit stream is encoded, for example, convolutional code 1/3 encoding is used, so that a length of the encoded bit stream becomes 480 bits, that is, C = 480. According to a notification of the base station or a predefinition, it is determined that the number of the groups M is 20; that is, the bit stream C is equidistantly divided into 20 groups, and the number of bits in each group is:

$$N = \lceil (136 + 24) \times 3 / 20 \rceil = 24 \text{bit}$$

The UE determines a modulation scheme and a modulation order, for example, QPSK2, according to a DCI notification or a preset value, and after modulation, M groups of symbol streams (information streams to be sent) are obtained, where each group includes 12 QPSK symbols. Herein, because only one CRC is added to the original information stream, equivalent to 20 groups of encoded and modulated information streams sharing one CRC, overhead is saved in a case of a low code rate.

205. Perform sending.

After grouping, the M groups of symbol streams need to be sent separately over M different time-frequency resources. A time-frequency resource includes a time resource (that is, M), where the M is at least greater than 1, may be equal to 1 to be compatible with the prior art (no grouping), or may be a multiple of 4 such as 4 ms or 8 ms, so as to reuse an HARQ process in a case of TTI bundling. For example, M = 4, four transmission resources correspond to RB#4-5 of subframe #1, RB#2-3 of frame #2, RB#15-16 of frame #3, and RB#30-31 of frame #4, respectively, where the time resources may be continuous or discontinuous. A length of a time resource may be notified by signaling or may be predefined; for example, a predefined size of a time domain is 16.

In a scheduling-based case, allocation of time-frequency resources may be determined by a base station and delivered to a UE by using signaling. Specifically, as an example, the base station may allocate all M groups of transmission resources by using DCI, where the DCI may include the number of RBs (PRB), a new MCS or an original MCS (or a new TBS), and value M or value N, and may further include a size of a time domain of a transmission resource.

In a contention-based case, the UE may first send a code, for example, an access code; this code may carry some information, for example, multiple time-frequency resources, for example, M, that the user needs to occupy; after successfully receiving the code word, the base station delivers acknowledgment information; and then the user continues to occupy a certain channel, until the transmission is completed. The occupied channel may be allocated by the base station, (1) where information about the channel information is carried in the acknowledgment information; or may be a corresponding channel of the access code and/or a channel in which the access code is located. In a last transmission after the grouping, a feature may be added, for example, a certain spreading factor such as (1,-1) is used over a pilot, or a string of all-special symbols, such as <NULL> frequently used in LTE, is added after encoded data, to indicate to a receiver that the transmission is completed.

206. Feed back information.

Because only one CRC is added to the uncoded original information stream corresponding to the M groups of bit streams, only after the receiver receives all M groups of information streams, can the received information streams be checked as a whole according to the CRC and be fed back. That is, after all the M groups of information streams are received, an ACK/NACK is fed back. It should be understood that feedback is not limited to an ACK/NACK and is not limited in the present invention.

Therefore, in a case of a low code rate, by grouping an information stream to be sent, transmission efficiency is ensured in this embodiment of the present invention. In addition, in a manner of CRC sharing, overhead is saved, encoding performance is improved, and a coverage range is expanded.

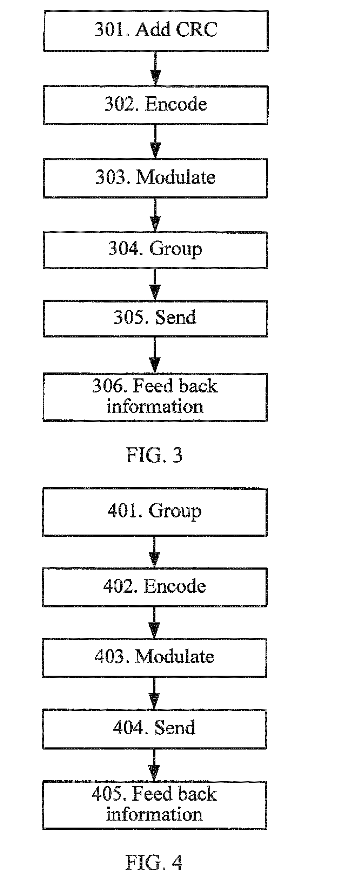

FIG. 3 is a flowchart of a method for sending information according to another embodiment of the present invention.

301. Add CRC.

A sender needs to send an information stream $a_0$, $a_1$, $a_2$, $a_3$,...,$a_{A-1}$ at a physical layer, where a length of the information stream is A. First, one CRC needs to be added to the information stream, so that the information stream becomes $b_0$,$b_1$,$b_2$,$b_3$,...,$b_{B-1}$, and a length of the information stream added with the CRC is B. That is, $B = A + L$, where L is a length of the CRC, and CRC check bits may be $p_0$, $p_1$, $p_2$, $p_3$,...,$p_{L-1}$. Generally, $L = 8,16,24$. For a specific method for generating a CRC, reference may be made to step 201 in FIG. 2, and details are not described herein again.

A relationship between $a_k$ and $b_k$ is:

$$b_k = a_k$$

where $k = 0,1,2,...,A\text{-}1$

$$b_k = p_{k-A}$$

where $k=A,A+1,A+2,...,A+L\text{-}1$

302. Perform encoding.

The information stream added with the CRC is encoded by using an encoder, where the encoder may be a Turbo encoder, such as a 1/3 Turbo encoder, or a convolutional code encoder, such as a 1/3 convolutional code encoder.

303. Perform modulation.

A modulation scheme may be predefined, or a base station may notify a UE of the modulation scheme by using signaling. Table 1 in step 204 lists correspondence between a modulation and coding scheme index $I_{MCS}$, a modulation order $Q_m$, and a transport block index $I_{TBS}$ of a data channel. The UE may learn the modulation and coding scheme index $I_{MCS}$ from downlink control information (Downlink Control Information, DCI) delivered by the base station, and may determine the modulation scheme, the modulation order $Q_m$, and the transport block index $I_{TBS}$ by querying the table.

304. Perform grouping.

First, the number of groups M or a group size N needs to be determined, or both M and N need to be determined. Specifically, M and N may be preset values, may be directly acquired by a UE locally, or a base station may notify the UE of M and N by using signaling. A length of a symbol stream after modulation in step 303 is C. The number of the groups M, the group size N, and C satisfy the following relationship:

$$M = \left\lceil \frac{C}{N} \right\rceil \text{ or } N = \left\lceil \frac{C}{M} \right\rceil$$

In this embodiment, an information stream to be grouped is a modulated symbol stream, and therefore the C and N are in units of symbols; and ⌈ ⌉ is a round-up operation. According to the foregoing relational expression, N may be determined according to M and C, and M may also be determined according to N and C. C is known, that is, the symbol stream may be grouped by acquiring either M or N. The number of symbols included in each group is N, and N is greater than 4.

The following describes an example of step 301 to step 304. It is assumed that a length of an original information stream is 136 bits; a 24-bit CRC is added after the information stream to form a bit stream of 160 bits; and then, the bit stream is encoded, for example, convolutional code 1/3 encoding is used, so that a length of the encoded bit stream becomes 480 bits. The UE determines a modulation scheme and a modulation order, for example, QPSK2, according to a DCI message or a preset value, and after modulation, a symbol stream of 240 symbols (information stream to be grouped), that is, C = 240, is obtained. According to a notification of the base station or a predefinition, it is determined that the number of the groups M is 20; that is, the symbol stream C is equidistantly divided into 20 groups, and the number of symbols in each group is:

$$N = \left\lceil (136+24) \times 3/2/20 \right\rceil = 12 \, \text{symbol}$$

That is, each group includes 12 QPSK symbols. Herein, because only one CRC is added to the original information stream, equivalent to 20 groups of encoded and modulated information streams sharing one CRC, overhead is saved in a case of a low code rate.

305. Perform sending.

After grouping, the M groups of symbol streams need to be sent separately over M different time-frequency resources. A time-frequency resource includes a time resource (that is, M), where the M is at least greater than 1, may be equal to 1 to be compatible with the prior art (no grouping), or may be a multiple of 4 such as 4 ms or 8 ms, so as to reuse an HARQ process in a case of TTI bundling. For example, M = 4, four transmission resources correspond to RB#4-5 of subframe #1, RB#2-3 of frame #2, RB#15-16 of frame #3, and RB#30-31 of frame #4, respectively, where the time resources may be continuous or discontinuous. A size of a time resource may be notified by signaling or may be predefined; for example, a predefined size of a time domain is 16.

In a scheduling-based case, allocation of time-frequency resources may be determined by a base station and delivered to a UE by using signaling. Specifically, as an example, the base station may allocate all M groups of transmission resources by using DCI, where the DCI may include the number of RBs (PRB), a new MCS or an original MCS (or a new TBS), and value M or value N, and may further include a size of a time domain of a transmission resource.

In a contention-based case, the UE may first send a code, for example, an access code; this code may carry some information, for example, multiple time-frequency resources, for example, M, that the user needs to occupy; after successfully receiving the code word, the base station delivers acknowledgment information; and then the user continues to occupy a channel, until the transmission is completed. The occupied channel may be allocated by the base station, where information about the channel information is carried in the acknowledgment information; or may be a corresponding channel of the access code and/or a channel in which the access code is located. In a last transmission after the grouping, a feature may be added, for example, a spreading factor such as (1,-1) is used over a pilot, or a string of all-special symbols, such as *<NULL>* frequently used in LTE, is added after encoded data, to indicate to a receiver that the transmission is completed.

306. Feed back information.

Because only one CRC is added to the uncoded original information stream corresponding to the M groups of bit streams, only after the receiver receives all M groups of information streams, can the received information streams be checked as a whole according to the CRC and be fed back. That is, after all the M groups of information streams are received, an ACK/NACK is fed back. It should be understood that feedback is not limited to an ACK/NACK and is not limited in the present invention.

Therefore, in a case of a low code rate, by grouping an information stream to be sent, transmission efficiency is ensured in this embodiment of the present invention. In addition, in a manner of CRC sharing, overhead is saved, and encoding performance is improved.

FIG. 4 is a flowchart of a method for sending information according to another embodiment of the present invention.

401. Perform grouping.

A sender needs to send an information stream C at a physical layer, and the information stream is grouped before encoding. First, the number of groups M or a group size N needs to be determined, or both M and N need to be determined. Specifically, M and N may be preset values, may be directly acquired by a UE locally, or a base station may notify the UE of M and N by using signaling. The number of the groups M, the group size N, and C satisfy the following relationship:

$$M = \left\lceil \frac{C}{N} \right\rceil \text{ or } N = \left\lceil \frac{C}{M} \right\rceil$$

In this embodiment, an information stream to be grouped is an uncoded bit stream, and therefore the C and N are in units of bits; and ⌈ ⌉ is a round-up operation. According to the foregoing relational expression, N may be determined according to M and C, and M may also be determined according to N and C. C is known, that is, the bit stream may be grouped by acquiring either M or N; and the number of bits included in each group is N.

402. Perform encoding.

After an original information stream is grouped, linear block code encoding is separately performed on each group of information streams, for example, RM (Reed-Muller) encoding, where a corresponding matrix of the RM encoding may be Table 3, and A is the number of original information bits. It is assumed that the original information bit stream is $a_0, a_1, a_2, a_3, ..., a_{A-1}$ and becomes $b_0, b_1, b_2, b_3, ..., b_{B-1}$ after encoding, where

$$b_i = \sum_{n=0}^{A-1} \left( a_n \cdot M_{i,n} \right) \bmod 2$$

,

and $i$ = 0, 1, 2, ..., $B$ -1

When $B$ = 32, Table 3 is used; and when B is another value, a corresponding (B,O) table is used for encoding.

**Table 3: Basis sequences for (32,O) codes**

| i | $M_{i,0}$ | $M_{i,1i}$ | $M_{i,2}$ | $Me_{i,3}$ | $M_{i,4}$ | $M_{i,5}$ | $M_{i,6}$ | $M_{i,7}$ | $M_{i,8}$ | $M_{i,9}$ | $M_{i,10}$ |
|---|---|---|---|---|---|---|---|---|---|---|---|
| 0 | 1 | 1 | 0 | 0 | 0 | 0 | 0 | 0 | 0 | 0 | 1 |
| 1 | 1 | 1 | 1 | 0 | 0 | 0 | 0 | 0 | 0 | 1 | 1 |
| 2 | 1 | 0 | 0 | 1 | 0 | 0 | 1 | 0 | 1 | 1 | 1 |
| 3 | 1 | 0 | 1 | 1 | 0 | 0 | 0 | 0 | 1 | 0 | 1 |
| 4 | 1 | 1 | 1 | 1 | 0 | 0 | 0 | 1 | 0 | 0 | 1 |
| 5 | 1 | 1 | 0 | 0 | 1 | 0 | 1 | 1 | 1 | 0 | 1 |
| 6 | 1 | 0 | 1 | 0 | 1 | 0 | 1 | 0 | 1 | 1 | 1 |
| 7 | 1 | 0 | 0 | 1 | 1 | 0 | 0 | 1 | 1 | 0 | 1 |
| 8 | 1 | 1 | 0 | 1 | 1 | 0 | 0 | 1 | 0 | 1 | 1 |
| 9 | 1 | 0 | 1 | 1 | 1 | 0 | 1 | 0 | 0 | 1 | 1 |
| 10 | 1 | 0 | 1 | 0 | 0 | 1 | 1 | 1 | 0 | 1 | 1 |
| 11 | 1 | 1 | 1 | 0 | 0 | 1 | 1 | 0 | 1 | 0 | 1 |
| 12 | 1 | 0 | 0 | 1 | 0 | 1 | 0 | 1 | 1 | 1 | 1 |
| 13 | 1 | 1 | 0 | 1 | 0 | 1 | 0 | 1 | 0 | 1 | 1 |
| 14 | 1 | 0 | 0 | 0 | 1 | 1 | 0 | 1 | 0 | 0 | 1 |

(continued)

| i | $M_{i,0}$ | $M_{i,1i}$ | $M_{i,2}$ | $Me_{i,3}$ | $M_{i,4}$ | $M_{i,5}$ | $M_{i,6}$ | $M_{i,7}$ | $M_{i,8}$ | $M_{i,9}$ | $M_{i,10}$ |
|----|---|---|---|---|---|---|---|---|---|---|---|
| 15 | 1 | 1 | 0 | 0 | 1 | 1 | 1 | 1 | 0 | 1 | 1 |
| 16 | 1 | 1 | 1 | 0 | 1 | 1 | 1 | 0 | 0 | 1 | 0 |
| 17 | 1 | 0 | 0 | 1 | 1 | 1 | 0 | 0 | 1 | 0 | 0 |
| 18 | 1 | 1 | 0 | 1 | 1 | 1 | 1 | 1 | 0 | 0 | 0 |
| 19 | 1 | 0 | 0 | 0 | 0 | 1 | 1 | 0 | 0 | 0 | 0 |
| 20 | 1 | 0 | 1 | 0 | 0 | 0 | 1 | 0 | 0 | 0 | 1 |
| 21 | 1 | 1 | 0 | 1 | 0 | 0 | 0 | 0 | 0 | 1 | 1 |
| 22 | 1 | 0 | 0 | 0 | 1 | 0 | 0 | 1 | 1 | 0 | 1 |
| 23 | 1 | 1 | 1 | 0 | 1 | 0 | 0 | 0 | 1 | 1 | 1 |
| 24 | 1 | 1 | 1 | 1 | 1 | 0 | 1 | 1 | 1 | 1 | 0 |
| 25 | 1 | 1 | 0 | 0 | 0 | 1 | 1 | 1 | 0 | 0 | 1 |
| 26 | 1 | 0 | 1 | 1 | 0 | 1 | 0 | 0 | 1 | 1 | 0 |
| 27 | 1 | 1 | 1 | 1 | 0 | 1 | 0 | 1 | 1 | 1 | 0 |
| 28 | 1 | 0 | 1 | 0 | 1 | 1 | 1 | 0 | 1 | 0 | 0 |
| 29 | 1 | 0 | 1 | 1 | 1 | 1 | 1 | 1 | 1 | 0 | 0 |
| 30 | 1 | 1 | 1 | 1 | 1 | 1 | 1 | 1 | 1 | 1 | 1 |
| 31 | 1 | 0 | 0 | 0 | 0 | 0 | 0 | 0 | 0 | 0 | 0 |

403. Perform modulation.

A modulation scheme may be predefined, or the base station may notify the UE of the modulation scheme by using signaling. Table 1 in step 204 lists correspondence between a modulation and coding scheme index $I_{MCS}$, a modulation order $Q_m$, and a transport block index $I_{TBS}$ of a data channel. The UE may learn the modulation and coding scheme index $I_{MCS}$ from downlink control information (Downlink Control Information, DCI) delivered by the base station, and may determine the modulation order $Q_m$ and the transport block index $I_{TBS}$ by querying the table.

404. Perform sending.

After grouping, the M groups of symbol streams need to be sent separately over M different time-frequency resources. A time-frequency resource includes a time resource (that is, M), where the M is at least greater than 1, may be equal to 1 to be compatible with the prior art (no grouping), or may be a multiple of 4 such as 4 ms or 8 ms, so as to reuse an HARQ process in a case of TTI bundling. For example, M = 4, four transmission resources correspond to RB#4-5 of subframe #1, RB#2-3 of frame #2, RB#15-16 of frame #3, and RB#30-31 of frame #4, respectively, where the time resources may be continuous or discontinuous. A size of a time resource may be notified by signaling or may be predefined; for example, a predefined size of a time domain is 16.

In a scheduling-based case, allocation of time-frequency resources may be determined by a base station and delivered to a UE by using signaling. Specifically, as an example, the base station may allocate all M groups of transmission resources by using DCI, where the DCI may include the number of RBs (PRB), a new MCS or an original MCS (or a new TBS), and value M or value N, and may further include a size of a time domain of a transmission resource.

In a contention-based case, the UE may first send a code, for example, an access code; this code may carry some information, for example, multiple time-frequency resources, for example, M, that the user needs to occupy; after successfully receiving the code word, the base station delivers acknowledgment information; and then the user continues to occupy a channel, until the transmission is completed. The occupied channel may be allocated by the base station, where information about the channel information is carried in the acknowledgment information; or may be a corresponding channel of the access code and/or a channel in which the access code is located. In a last transmission after the grouping, a feature may be added, for example, a spreading factor such as (1,-1) is used over a pilot, or a string of all-special symbols, such as *<NULL>* frequently used in LTE, is added after encoded data, to indicate to a receiver that the transmission is completed.

405. Feed back information.

Because the information stream in this embodiment is not added with check information, the grouped symbol streams may be independently demodulated and decoded at a receiving end, and the receiver may feed back an ACK/NACK to each of the received M groups of symbol streams; and certainly, an ACK/NACK may also be fed back after all M groups of symbol streams are received. If an NACK is fed back, over which time-frequency resource information is incorrect also needs to be fed back simultaneously. For example, a total of four groups of information are sent, and the first and the third are incorrect. In addition to feeding back an NACK, the receiver also feeds back a bitmap: 1010 to indicate which group is incorrect, for example, 0001 indicates that the first group is incorrect, and 0011 indicates that the third group is incorrect.

The following describes an example of step 401 to 405. It is assumed that the sender needs to send 20-byte information, that is, 20 x 8 = 160 bits, which are divided into 20 groups with 8 bits per group for transmission; and with RM(24,O), O=8, RM encoding is performed on each group of information streams.

In addition, if a manner of continuous sending without waiting for feedback is used, power consumption of the UE may be significantly saved. Further, no addition of check information is also a reduction of overhead.

Therefore, in a case of a low code rate, by grouping an information stream to be sent, transmission efficiency is ensured in this embodiment of the present invention. In addition, in a manner of RM encoding, overhead is saved, and encoding performance is improved.

In addition, as another embodiment, check information may be added in a high level to an information stream to be sent, so that the information stream is encoded and modulated without being added with CRC at the physical layer. The encoding includes Turbo code encoding, convolutional code encoding, or RM code encoding. A grouping process may be performed before encoding or after encoding (before modulation), or after modulation. For detailed steps, reference may be made to corresponding steps in FIG. 2 to FIG. 4, and therefore details are described herein again.

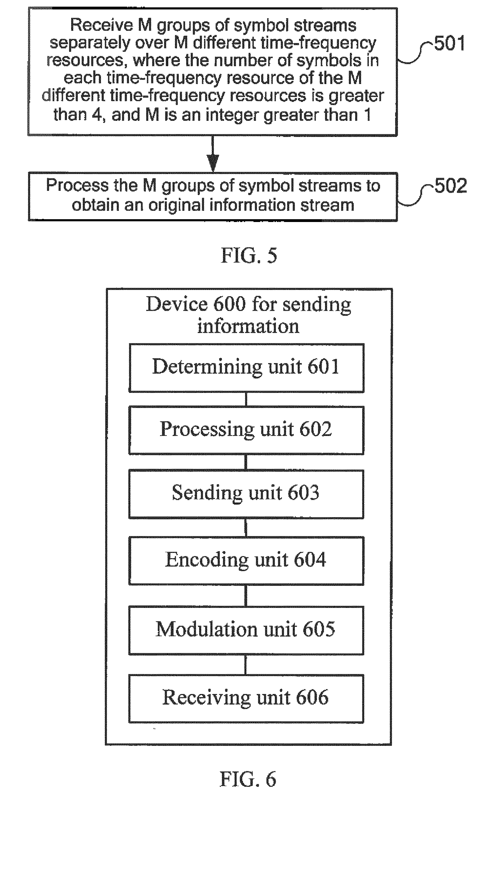

FIG. 5 is a flowchart of a method for receiving information according to an embodiment of the present invention.

501. Receive M groups of symbol streams separately over M different time-frequency resources, where the number of symbols in each time-frequency resource of the M different time-frequency resources is greater than 4, and M is an integer greater than 1.

502. Process the M groups of symbol streams to obtain an original information stream.

Based on the foregoing technical solutions, in a case of a low code rate, by grouping an information stream to be sent, transmission efficiency is ensured in this embodiment of the present invention.

Optionally, as an embodiment, in step 502, the processing the M groups of symbol streams to obtain an original information stream may include: separately demodulating the M groups of symbol streams to obtain M groups of bit streams, where a length of the bit streams is C, and a length of each group of bit streams is N; merging the M groups of bit streams to a bit stream to be decoded; decoding the bit stream to be decoded to obtain the original information stream, where the decoding includes Turbo code decoding or convolutional code decoding; and checking the original information stream.

Optionally, as an embodiment, in step 502, the processing the M groups of symbol streams to obtain an original information stream may include: merging the M groups of symbol streams to a symbol stream to be demodulated, where a length of the symbol stream to be demodulated is C, and a length of each group of symbol streams is N; demodulating the symbol stream to be demodulated to obtain a bit stream to be decoded; decoding the bit stream to be decoded to obtain the original information stream, where the decoding includes Turbo code decoding or convolutional code decoding; and checking the original information stream.

Optionally, as an embodiment, in step 502, the processing the M groups of symbol streams to obtain an original information stream may include: separately demodulating the M groups of symbol streams to obtain M groups of bit streams to be decoded; separately performing linear block code decoding on the M groups of bit streams to be decoded to obtain M groups of bit streams; merging the M groups of bit streams into the original information stream, where a length of the original information stream is C, and a length of each group of bit streams is N; and checking the original information stream.

Optionally, as an embodiment, the checking the original information stream may include: cyclic redundancy check or high-level check information check; and the decoding may further include: linear block code decoding.

Optionally, as an embodiment, M may be determined according to N and C, or N may be determined according to M and C:

$$M = \left\lceil \frac{C}{N} \right\rceil \text{ or } N = \left\lceil \frac{C}{M} \right\rceil$$

where the C and N are in units of bits, or the C and N are in units of symbols, N is an integer greater than or equal to 1, and $\lceil \rceil$ is a round-up operation.

Optionally, as an embodiment, a receiving end may determine and send a resource allocation message, where the resource allocation message is used to configure a time-frequency resource occupied by each group of the M groups of symbol streams. The resource allocation message includes at least one of the following items: the number of groups M, a group size N, a time-domain size of the time-frequency resource occupied by each group, the number of resource blocks RBs and a modulation and coding scheme MCS, and the number of RBs and a transport block size TBS.

Optionally, as an embodiment, the receiving M groups of symbol streams separately over M different time-frequency resources includes: sending acknowledgment information to a user equipment after a first group of the M groups of symbol streams is successfully received, where the acknowledgment information is used to instruct that a current channel continues to be occupied in subsequent transmission.

Optionally, as an embodiment, after the receiving is complete, feedback for the M groups of symbol streams may be sent, or feedback for each group of symbol streams may be sent.

Therefore, in a case of a low code rate, by grouping an information stream to be sent, transmission efficiency is ensured in this embodiment of the present invention. In addition, overhead is saved in a manner of sharing a check code or using linear block code encoding.

FIG. 6 is a schematic block diagram of a device for sending information according to an embodiment of the present invention. As shown in FIG. 6, a device 600 for sending information includes a determining unit 601, a processing unit 602, and a sending unit 603, where:

the determining unit 601 determines the number of groups M and/or a group size N, where M is an integer greater than 1, and N is an integer greater than 1 or equal to 1; the processing unit 602 processes, according to M and/or N, an information stream to be grouped to obtain M groups of information streams to be sent; and the sending unit 603 sends, separately over M different time-frequency resources, the M groups of information streams to be sent, where the number of symbols in each time-frequency resource of the M different time-frequency resources is greater than 4.

In a case of a low code rate, by grouping an information stream to be sent, transmission efficiency is ensured in this embodiment of the present invention. In addition, in a manner of sharing a check code or using linear block coding, overhead is saved.

The device 600 for sending information may execute each step of the method embodiments shown in FIG. 1 to FIG. 4. For the purpose of avoiding repetition, details are not described herein again.

Optionally, as an embodiment, the device 600 for sending information may further include an encoding unit 604 and a modulation unit 605, and the processing unit 601 is specifically configured to: add a cyclic redundancy check code behind the information stream to be grouped; encode, by using the encoding unit 604, the information stream to be grouped to obtain a bit stream, where the information stream to be grouped is added with the cyclic redundancy check code, and the encoding unit 604 includes Turbo code encoding or convolutional code encoding; divide the bit stream into M groups of bit streams to be modulated, where a length of the bit stream is C, and a length of each group of bit streams to be modulated is N; and separately modulate, by using the modulation unit 605, the M groups of bit streams to be modulated to obtain M groups of information streams to be sent. Similarly, the processing procedures in FIG. 3 and FIG. 4 may further be completed by the device 600 for sending information, and details are not described herein again.

Optionally, as an embodiment, the device 600 for sending information further includes a receiving unit 606, and the determining unit 601 is specifically configured to: locally acquire the preset number of the groups M and/or the group size N, or externally receive the number of the groups M and/or the group size N by using the receiving unit 606.

Optionally, the determining unit 601 is specifically configured to: determine M according to N and C, or determine N according to M and C:

$$M = \left\lceil \frac{C}{N} \right\rceil \text{ or } N = \left\lceil \frac{C}{M} \right\rceil$$

where the C and N are in units of bits, or the C and N are in units of symbols, and ⌈ ⌉ is a round-up operation.

Optionally, as an embodiment, the receiving unit 606 is specifically configured to: externally receive a resource allocation message, where the resource allocation message is used to configure a time-frequency resource occupied by each group of the M groups of information streams to be sent. The resource allocation message includes at least one of the following items: the number of groups M, a group size N, a time-domain size of the time-frequency resource occupied by each group, the number of resource blocks RBs and a modulation and coding scheme MCS, and the number of RBs and a transport block size TBS.

Optionally, as an embodiment, the receiving unit 606 is specifically configured to: receive acknowledgment information sent by a base station after a first group of the M groups of information streams to be sent is successfully sent, where the acknowledgment information is used to instruct that a current channel continues to be occupied in subsequent transmission. The receiving unit 606 is further configured to: receive feedback for the M groups of information streams to be sent, or receive feedback for each group of information streams to be sent.

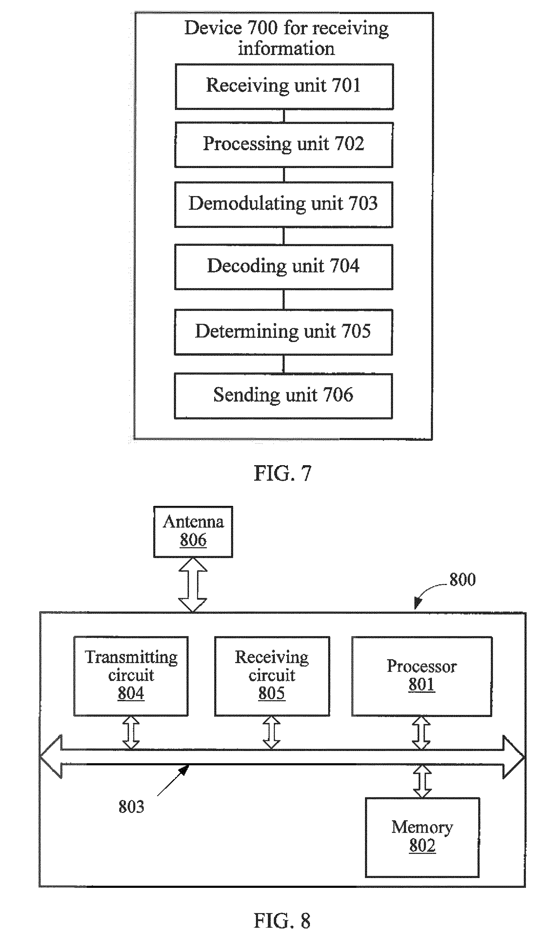

FIG. 7 is a schematic block diagram of a device for receiving information according to an embodiment of the present invention. As shown in FIG. 7, a device 700 for receiving information includes a receiving unit 701 and a processing unit 702.

The receiving unit 701 receives M groups of symbol streams separately over M different time-frequency resources, where the number of symbols in each time-frequency resource of the M different time-frequency resources is greater than 4, and M is an integer greater than 1. The processing unit 702 processes the M groups of symbol streams to obtain an original information stream.

In a case of a low code rate, by grouping an information stream to be sent, transmission efficiency is ensured in this embodiment of the present invention. In addition, in a manner of sharing a check code or using linear block coding, overhead is saved.

The device 700 for receiving information may execute each step of the method embodiment shown in FIG 5. For the purpose of avoiding repetition, details are not described herein again.

Optionally, as an embodiment, the device 700 for receiving information further includes a demodulation unit 703 and a decoding unit 704, and the processing unit 702 is specifically configured to: separately demodulate the M groups of symbol streams by using the demodulation unit 704 to obtain M groups of bit streams, where a length of the bit streams is C, and a length of each group of bit streams is N; merge the M groups of bit streams to a bit stream to be decoded; decode, by using the decoding unit 703, the bit stream to be decoded to obtain the original information stream, where the decoding includes Turbo code decoding or convolutional code decoding; and check the original information stream.

FIG. 8 is a schematic block diagram of a device for sending information according to another embodiment of the present invention. In FIG. 8, a device 800 for sending information includes a processor 801 and a memory 802. The processor 801 and the memory 802 are connected by a bus system 803.

The memory 802 is configured to store an instruction for the processor 801 to execute the following operations: determine the number of groups M and/or a group size N, where M is an integer greater than 1, and N is an integer greater than 1 or equal to 1; process, according to M and/or N, an information stream to be grouped to obtain M groups of information streams to be sent; and send, separately over M different time-frequency resources, the M groups of information streams to be sent, where the number of symbols in each time-frequency resource of the M different time-frequency resources is greater than 4.

In a case of a low code rate, by grouping an information stream to be sent, transmission efficiency is ensured in this embodiment of the present invention. In addition, by sharing a check code or using linear block coding, overhead is saved.

In addition, the device 800 for sending information may further include a transmitting circuit 804, a receiving circuit 805, and an antenna 806. The processor 801 controls an operation of the device 800 for sending information, and the processor 801 may also be called a CPU (Central Processing Unit, central processing unit). The memory 802 may include a read-only memory and a random access memory, and provide an instruction and data for the processor 801. Part of the memory 802 may further include a nonvolatile random access memory (NVRAM). In a specific application, the transmitting circuit 804 and the receiving circuit 805 may be coupled to the antenna 806. Components of the device 800 for sending information are coupled by using the bus system 803, where in addition to including a data bus, the bus system 803 may further include a power bus, a control bus, and a status signal bus. However, for clarity of description, each bus in the figure is labeled as the bus system 803.

The methods disclosed in the foregoing embodiments of the present invention may be applied in the processor 801, or implemented by the processor 801. The processor 801 may be an integrated circuit chip having a capability of signal processing. In an implementation process, each step of the foregoing method may be completed by an integrated logic circuit in hardware of the processor 801, or by an instruction in a form of software. The processor 801 may be a general processor, a digital signal processor (DSP), an application-specific integrated circuit (ASIC), a field programmable gate array (FPGA), or another programmable logic device, an independent gate or a transistor logic device, or an independent hardware component, and may implement or execute various methods, steps, or logic block diagrams disclosed in the embodiments of the present invention. The general processor may be a microprocessor; or the processor may also be any conventional processor or the like. Steps with reference to the methods disclosed in the embodiments of the present invention may be directly executed and completed by hardware of a decoding processor, or executed and completed by a combination of the hardware and a software module of the decoding processor. The software module may be placed in a storage medium that is mature in the art, such as a random access memory, a flash memory, a read-only memory, a programmable read-only memory, an electrically erasable programmable memory, or a register. The storage medium is located in the memory 802; and the processor 801 reads information from the memory 802 and completes steps of the foregoing methods in combination with its hardware.

Optionally, as an embodiment, the processor 801 may add a cyclic redundancy check code behind the information stream to be grouped; encode the information stream to be grouped to obtain a bit stream, where the information stream to be grouped is added with the cyclic redundancy check code, and the encoding includes Turbo code encoding or convolutional code encoding; divide the bit stream into M groups of bit streams to be modulated, where a length of the bit stream is C, and a length of each group of bit streams to be modulated is N; and separately modulate the M groups of bit streams to obtain M groups of information streams to be sent.

Optionally, as another embodiment, the processor 801 may add a cyclic redundancy check code behind the information stream to be grouped; encode the information stream to be grouped to obtain a bit stream, where the information stream to be grouped is added with the cyclic redundancy check code, and the encoding includes Turbo code encoding or convolutional code encoding; modulate the bit stream to obtain a symbol stream; and divide the symbol stream into M groups of information streams to be sent, where a length of the symbol stream is C, and a length of each group of information streams to be sent is N.

Optionally, as another embodiment, the processor 801 may divide the information stream to be grouped into M groups of information streams to be encoded, where a length of the information stream to be grouped is C, and a length of each group of information streams to be encoded is N; perform linear block code encoding on the M groups of information streams to be encoded to obtain M groups of bit streams; and separately modulate the M groups of bit streams to obtain M groups of information streams to be sent.

Optionally, as another embodiment, the processor 801 may divide the information stream to be grouped into M groups of information streams to be encoded, where a length of the information stream to be grouped is C, a length of each group of information streams to be encoded is N, and the information stream to be grouped includes high-level check information; encode the M groups of information streams to be encoded to obtain M bit streams, where the encoding includes Turbo encoding, convolutional code encoding, or linear block code encoding; and modulate the M groups of bit streams to obtain M groups of information streams to be sent.

Optionally, as another embodiment, the processor 801 may encode the information stream to be grouped to obtain a bit stream, where the encoding includes Turbo encoding, convolutional code encoding, or linear block code encoding, and the information stream to be grouped includes high-level check information; divide the bit stream into M groups of bit streams to be modulated, where a length of the bit stream is C, and a length of each group of bit streams to be modulated is N; and modulate the M groups of bit streams to be modulated to obtain M groups of information streams to be sent.

Optionally, as another embodiment, the processor 801 may encode the information stream to be grouped to obtain a bit stream, where the encoding includes Turbo encoding, convolutional code encoding, or linear block code encoding, and the information stream to be grouped includes high-level check information; modulate the bit stream to obtain a symbol stream; and divide the symbol stream into M groups of information streams to be sent, where a length of the symbol stream is C, and a length of each group of information streams to be sent is N.

Optionally, as another embodiment, in a scheduling-based case, the receiving circuit 805 may externally receive a resource allocation message by using the antenna 806, where the resource allocation message is used to configure a time-frequency resource occupied by each group of M groups of information streams to be sent. The resource allocation message includes at least one of the following items: the number of groups M, a group size N, a time-domain size of the time-frequency resource occupied by each group, the number of resource blocks RBs and a modulation and coding scheme MCS, and the number of RBs and a transport block size TBS.

Optionally, as another embodiment, in a contention-based case, after a first group of M groups of information streams to be sent is successfully sent, the receiving unit 805 may receive, by using the antenna 806, acknowledgment information sent by a base station, where the acknowledgment information is used to instruct that a current channel continues to be occupied in subsequent transmission.

Optionally, as another embodiment, the receiving circuit 805 may receive, by using the antenna 806, feedback for M groups of information streams to be sent, or feedback for each group of information streams to be sent.

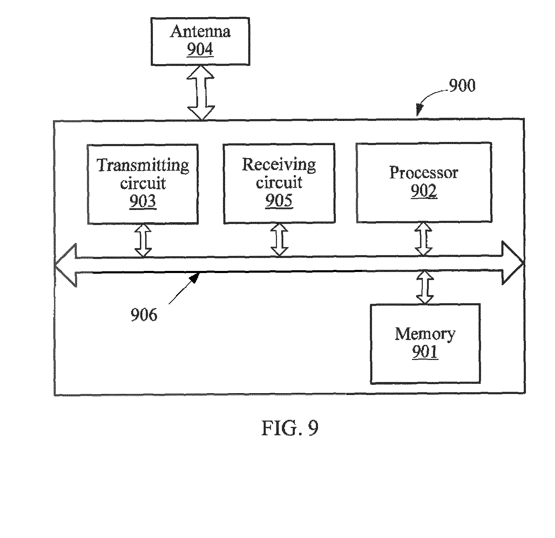

FIG. 9 is a schematic block diagram of a device for receiving information according to another embodiment of the present invention. In FIG. 9, a device 900 for receiving information includes a memory 901, a processor 902, a transmitting circuit 903, and an antenna 904.

The memory 901 is configured to store an instruction for the processor 902 to execute the following operations: receive M groups of symbol streams separately over M different time-frequency resources, where the number of symbols in each time-frequency resource of the M different time-frequency resources is greater than 4, and M is an integer greater than 1; and process the M groups of symbol streams to obtain the original information stream.

In a case of a low code rate, by grouping an information stream to be sent, transmission efficiency is ensured in this embodiment of the present invention. In addition, by sharing a check code or using linear block coding, overhead is saved.

In addition, the device 900 for receiving information may further include a receiving circuit 905 and the like. The processor 902 controls an operation of a base station 900; and the processor 902 may also be called a CPU (Central Processing Unit, central processing unit). The memory 901 may include a read-only memory and a random access memory, and provides an instruction and data for the processor 902. Part of the memory 901 may further include a nonvolatile random access memory (NVRAM). In a specific application, the transmitting circuit 903 and the receiving circuit 905 may be coupled to the antenna 904. Components of the device 900 for receiving information are coupled by using a bus system 906, where in addition to including a data bus, the bus system 906 may also include a power bus, a control bus, and a status signal bus. However, for clarity of description, each bus in the figure is labeled as the bus system 906.

The methods disclosed in the embodiments of the present invention may be applied in the processor 902, or implemented by the processor 902. The processor 902 may be an integrated circuit chip having a capability of signal processing. In an implementation process, each step of the foregoing methods may be completed by an integrated logic circuit in hardware of the processor 902, or by an instruction in a form of software. The processor 902 may be a general processor, a digital signal processor (DSP), an application-specific integrated circuit (ASIC), a field programmable gate array (FPGA), or another programmable logic device, an independent gate or a transistor logic device, or an independent hardware component, and may implement or execute various methods, steps, or logic block diagrams disclosed in the embodiments of the present invention. The general processor may be a microprocessor; or the processor may also be any conventional processor or the like. Steps in combination with the methods disclosed in the embodiments of the present invention may be executed and completed by hardware of a decoding processor, or executed and completed by a combination of the hardware and a software module of the decoding processor. The software module may be placed in a storage medium that is mature in the art, such as a random access memory, a flash memory, a read-only memory, a programmable read-only memory, an electrically erasable programmable memory, or a register. The storage medium is located in the memory 901; and the processor 902 reads information from the memory 901 and completes steps of the foregoing methods in combination with its hardware.

Optionally, as an embodiment, the processor 902 separately demodulates M groups of symbol streams to obtain M groups of bit streams, where a length of the bit stream is C, and a length of each group of bit streams is N; merges the M groups of bit streams to a bit stream to be decoded; decodes the bit stream to be decoded to obtain the original information stream, where the decoding includes Turbo code decoding or convolutional code decoding; and checks the original information stream

Optionally, as an embodiment, the processor 902 merges M groups of symbol streams to a symbol stream to be demodulated, where a length of the symbol stream to be demodulated is C, and a length of each group of symbol streams is N; demodulates the symbol stream to be demodulated to obtain a bit stream to be decoded; decodes the bit stream to be decoded to obtain the original information stream, where the decoding includes Turbo code decoding or convolutional code decoding; and checks the original information stream.

Optionally, as an embodiment, the processor 902 separately demodulates M groups of symbol streams to obtain M groups of bit streams to be decoded; separately performs linear block code decoding on the M groups of bit streams to be decoded to obtain M groups of bit streams; merges the M groups of bit streams to the original information stream, where a length of the original information stream is C, and a length of each group of bit streams is N; and checks the original information stream.

A person of ordinary skill in the art may be aware that, in combination with the examples described in the embodiments disclosed in this specification, method steps and units may be implemented by electronic hardware, computer software, or a combination of thereof. To clearly describe the interchangeability between the hardware and the software, the foregoing has generally described compositions and steps of each example according to functions. Whether the functions are performed by hardware or software depends on particular applications and design constraint conditions of the technical solution. A person of ordinary skill in the art may use different methods to implement the described functions for each particular application, but it should not be considered that the implementation goes beyond the scope of the present invention.

The methods or steps described in combination with the embodiments disclosed herein may be implemented using hardware, a software program executed by a processor, or the combination thereof. The software program may be placed in a random access memory (RAM), a memory, a read-only memory (ROM), an electrically programmable ROM, an electrically erasable programmable ROM, a register, a hard disk, a removable magnetic disk, a CD-ROM, or a storage medium of any other form well-known in the technical field.

The present invention is described in detail with reference to the accompanying drawings in combination with the exemplary embodiments, but it is not limited to the foregoing. Various equivalent modifications or replacements made by a person skilled in the art without departing from the spirit and essence of the present invention shall fall within the scope of the present invention.

**Claims**

1. A method for sending information, comprising:

   determining the number of groups M and/or a group size N, wherein the M is an integer greater than 1, and the N is an integer greater than 1 or equal to 1;
   processing, according to the M and/or the N, an information stream to be grouped to obtain M groups of information streams to be sent; and
   sending, separately over M different time-frequency resources, the M groups of information streams to be sent, wherein the number of symbols in each time-frequency resource of the M different time-frequency resources is greater than 4.

2. The method according to claim 1, wherein the processing, according to the M and/or the N, an information stream to be grouped to obtain M groups of information streams to be sent comprises:

   adding a cyclic redundancy check code behind the information stream to be grouped;
   encoding the information stream to be grouped that is added with the cyclic redundancy check code to obtain a bit stream, wherein the encoding comprises Turbo code encoding or convolutional code encoding;
   dividing the bit stream into M groups of bit streams to be modulated, wherein a length of the bit stream is C, and a length of each group of bit streams to be modulated is N; and
   separately modulating the M groups of bit streams to be modulated to obtain M groups of information streams to be sent.

3. The method according to claim 1, wherein the processing, according to the M and/or the N, an information stream to be grouped to obtain M groups of information streams to be sent comprises:

   adding a cyclic redundancy check code behind the information stream to be grouped;
   encoding the information stream to be grouped that is added with the cyclic redundancy check code to obtain a bit stream, wherein the encoding comprises Turbo code encoding or convolutional code encoding;
   modulating the bit stream to obtain a symbol stream; and
   dividing the symbol stream into M groups of information streams to be sent, wherein a length of the symbol stream is C, and a length of each group of information streams to be sent is N.

4. The method according to claim 1, wherein the processing, according to the M and/or the N, an information stream to be grouped to obtain M groups of information streams to be sent comprises:

   dividing the information stream to be grouped into M groups of information streams to be encoded, wherein a length of the information stream to be grouped is C, and a length of each group of information streams to be encoded is N;
   separately performing linear block code encoding on the M groups of information streams to be encoded to obtain M groups of bit streams; and
   separately modulating the M groups of bit streams to obtain M groups of information streams to be sent.

5. The method according to claim 1, wherein the processing, according to the M and/or the N, an information stream to be grouped to obtain M groups of information streams to be sent comprises:

   dividing the information stream to be grouped into M groups of information streams to be encoded, wherein a length of the information stream to be grouped is C, a length of each group of information streams to be encoded is N, and the information stream to be grouped comprises high-level check information;
   encoding the M groups of information streams to be encoded to obtain M bit streams, wherein the encoding comprises Turbo encoding, convolutional code encoding, or linear block code encoding; and

modulating the M groups of bit streams to obtain M groups of information streams to be sent.

6. The method according to claim 1, wherein the processing, according to the M and/or the N, an information stream to be grouped to obtain M groups of information streams to be sent comprises:

encoding the information stream to be grouped to obtain a bit stream, wherein the encoding comprises Turbo encoding, convolutional code encoding, or linear block code encoding, and the information stream to be grouped comprises high-level check information;
dividing the bit stream into M groups of bit streams to be modulated, wherein a length of the bit stream is C, and a length of each group of bit streams to be modulated is N; and
modulating the M groups of bit streams to be modulated to obtain M groups of information streams to be sent.

7. The method according to claim 1, wherein the processing, according to the M and/or the N, an information stream to be grouped to obtain M groups of information streams to be sent comprises:

encoding the information stream to be grouped to obtain a bit stream, wherein the encoding comprises Turbo encoding, convolutional code encoding, or linear block code encoding, and the information stream to be grouped comprises high-level check information;
modulating the bit stream to obtain a symbol stream; and
dividing the symbol stream into M groups of information streams to be sent, wherein a length of the symbol stream is C, and a length of each group of information streams to be sent is N.

8. The method according to any one of claims 1 to 7, wherein the determining the number of groups M and/or a group size N comprises:

locally acquiring the preset number of the groups M and/or the group size N; or
externally receiving the number of the groups M and/or the group size N.

9. The method according to any one of claims 1 to 7, wherein the determining the number of groups M and/or a group size N comprises:

determining the M according to the N and the C, or determining the N according to the M and theC:

$$M = \left\lceil \frac{C}{N} \right\rceil \text{ or } N = \left\lceil \frac{C}{M} \right\rceil$$

wherein the C and N are in units of bits, or the C and N are in units of symbols, and $\lceil \ \rceil$ is a round-up operation.

10. The method according to claim 8, wherein the externally receiving the number of the groups M and/or the group size N comprises: receiving a resource allocation message, wherein the resource allocation message is used to configure a time-frequency resource occupied by each group of the M groups of information streams to be sent.

11. The method according to claim 10, wherein the resource allocation message comprises at least one of the following items:

the number of the groups M;
the group size N;
a length of a time domain of the time-frequency resource occupied by each group;
the number of resource blocks RBs and a modulation and coding scheme MCS; and
the number of RBs and a transport block size TBS.

12. The method according to claim 1, wherein the sending, separately over M different time-frequency resources, the M groups of information streams to be sent comprises: receiving acknowledgment information sent by a base station after a first group of the M groups of information streams to be sent is successfully sent, wherein the acknowledgment information is used to instruct that a current channel continues to be occupied in subsequent transmission.

**13.** The method according to claim 1, further comprising:

receiving feedback for the M groups of information streams to be sent; or,
receiving feedback for each group of information streams to be sent.

**14.** A method for receiving information, comprising:

receiving M groups of symbol streams separately over M different time-frequency resources, wherein the number of symbols in each time-frequency resource of the M different time-frequency resources is greater than 4, and the M is an integer greater than 1; and
processing the M groups of symbol streams to obtain an original information stream.

**15.** The method according claim 14, wherein the processing the M groups of symbol streams to obtain an original information stream comprises:

separately demodulating the M groups of symbol streams to obtain M groups of bit streams, wherein a length of the bit streams is C, and a length of each group of bit streams is N;
merging the M groups of bit streams into a bit stream to be decoded;
decoding the bit stream to be decoded to obtain the original information stream, wherein the decoding comprises Turbo code decoding or convolutional code decoding; and
checking the original information stream.

**16.** The method according claim 14, wherein the processing the M groups of symbol streams to obtain an original information stream comprises:

merging the M groups of symbol streams into a symbol stream to be demodulated, wherein a length of the symbol stream to be demodulated is C, and a length of each group of symbol streams is N;
demodulating the symbol stream to be demodulated to obtain a bit stream to be decoded;
decoding the bit stream to be decoded to obtain the original information stream, wherein the decoding comprises Turbo code decoding or convolutional code decoding; and
checking the original information stream.

**17.** The method according claim 14, wherein the processing the M groups of symbol streams to obtain an original information stream comprises:

separately demodulating the M groups of symbol streams to obtain M groups of bit streams to be decoded;
separately performing linear block code decoding on the M groups of bit streams to be decoded to obtain M groups of bit streams;
merging the M groups of bit streams into the original information stream, wherein a length of the original information stream is C, and a length of each group of bit streams is N; and
checking the original information stream.

**18.** The method according to any one of claims 15 to 16, wherein the checking the original information stream comprises: cyclic redundancy check or high-level check information check; and
the decoding further comprises: linear block code decoding.

**19.** The method according to any one of claims 14 to 17, further comprising: determining the number of groups M and/or a group size N, which comprises:

determining the M according to the N and the C, or determining the N according to the M and the C:

$$M = \left\lceil \frac{C}{N} \right\rceil \text{ or } N = \left\lceil \frac{C}{M} \right\rceil$$

wherein the C and N are in units of bits, or the C and N are in units of symbols, N is an integer greater than 1 or equal to 1, and $\lceil \ \rceil$ is a round-up operation.

**20.** The method according to claim 19, further comprising: determining and sending a resource allocation message, wherein the resource allocation message is used to configure a time-frequency resource occupied by each group of the M groups of symbol streams.

**21.** The method according to claim 20, wherein the resource allocation message comprises at least one of the following items:

the number of the groups M;
the group size N;
a length of a time domain of the time-frequency resource occupied by each group;
the number of resource blocks RBs and a modulation and coding scheme MCS; and
the number of RBs and a transport block size TBS.

**22.** The method according to claim 14, wherein the receiving M groups of symbol streams separately over M different time-frequency resources comprises: sending acknowledgment information to a user equipment after a first group of the M groups of symbol streams is successfully received, wherein the acknowledgment information is used to instruct that a current channel continues to be occupied in subsequent transmission.

**23.** The method according to claim 14, further comprising:

sending feedback for the M groups of symbol streams; or
sending feedback for each group of symbol streams.

**24.** A device for sending information, comprising:

a determining unit, configured to determine the number of groups M and/or a group size N, wherein the M is an integer greater than 1, and the N is an integer greater than 1 or equal to 1;
a processing unit, configured to process, according to the M and/or the N, an information stream to be grouped to obtain M groups of information streams to be sent; and
a sending unit, configured to send, separately over M different time-frequency resources, the M groups of information streams to be sent, wherein the number of symbols in each time-frequency resource of the M different time-frequency resources is greater than 4.

**25.** The device for sending information according to claim 24, wherein the device for sending information further comprises an encoding unit and a modulation unit, and the processing unit is specifically configured to:

add a cyclic redundancy check code behind the information stream to be grouped;
encode, by using the encoding unit, the information stream to be grouped that is added with the cyclic redundancy check code to obtain a bit stream, wherein the encoding unit comprises Turbo code encoding or convolutional code encoding;
divide the bit stream into M groups of bit streams to be modulated, wherein a length of the bit stream is C, and a length of each group of bit streams to be modulated is N; and
separately modulate, by using the modulation unit, the M groups of bit streams to be modulated to obtain M groups of information streams to be sent.

**26.** The device for sending information according to claim 24, wherein the device for sending information further comprises an encoding unit and a modulation unit, and the processing unit is specifically configured to:

add a cyclic redundancy check code behind the information stream to be grouped;
encode, by using the encoding unit, the information stream to be grouped that is added with the cyclic redundancy check code to obtain a bit stream, wherein the encoding comprises Turbo code encoding or convolutional code encoding;
modulate, by using the modulation unit, the bit stream to obtain a symbol stream; and
divide the symbol stream into M groups of information streams to be sent, wherein a length of the symbol stream is C, and a length of each group of information streams to be sent is N.

**27.** The device for sending information according to claim 24, wherein the device for sending information further comprises an encoding unit and a modulation unit, and the processing unit is specifically configured to:

divide the information stream to be grouped into M groups of information streams to be encoded, wherein a length of the information stream to be grouped is C, and a length of each group of information streams to be encoded is N;

separately perform, by using the encoding unit, linear block code encoding on the M groups of information streams to be encoded to obtain M groups of bit streams; and

separately modulate, by using the modulation unit, the M groups of bit streams to obtain M groups of information streams to be sent.

28. The device for sending information according to claim 24, wherein the device for sending information further comprises an encoding unit and a modulation unit, and the processing unit is specifically configured to:

divide the information stream to be grouped into M groups of information streams to be encoded, wherein a length of the information stream to be grouped is C, a length of each group of information streams to be encoded is N, and the information stream to be grouped comprises high-level check information;

encode, by using the encoding unit, the M groups of information streams to be encoded to obtain M bit streams, wherein the encoding comprises Turbo encoding, convolutional code encoding, or linear block code encoding; and

modulate, by using the modulation unit, the M groups of bit streams to obtain M groups of information streams to be sent.

29. The device for sending information according to claim 24, wherein the device for sending information further comprises an encoding unit and a modulation unit, and the processing unit is specifically configured to:

encode, by using the encoding unit, the information stream to be grouped to obtain a bit stream, wherein the encoding comprises Turbo encoding, convolutional code encoding, or linear block code encoding, and the information stream to be grouped comprises high-level check information;

divide the bit stream into M groups of bit streams to be modulated, wherein a length of the bit stream is C, and a length of each group of bit streams to be modulated is N; and

modulate, by using the modulation unit, the M groups of bit streams to be modulated to obtain M groups of information streams to be sent.

30. The device for sending information according to claim 24, wherein the device for sending information further comprises an encoding unit and a modulation unit, and the processing unit is specifically configured to:

encode, by using the encoding unit, the information stream to be grouped to obtain a bit stream, wherein the encoding comprises Turbo encoding, convolutional code encoding, or linear block code encoding, and the information stream to be grouped comprises high-level check information;

modulate, by using the modulation unit, the bit stream to obtain a symbol stream; and

divide the symbol stream into M groups of information streams to be sent, wherein a length of the symbol stream is C, and a length of each group of information streams to be sent is N.

31. The device for sending information according to any one of claims 24 to 30, wherein the device for sending information further comprises a receiving unit, and the determining unit is specifically configured to:

locally acquire the preset number of the groups M and/or the group size N; or

externally receive, by using the receiving unit, the number of the groups M and/or the group size N.

32. The device for sending information according to any one of claims 24 to 30, wherein the determining unit is specifically configured to:

determine the M according to the N and the C, or determine the N according to the M and the C:

$$M = \left\lceil \frac{C}{N} \right\rceil \text{ or } N = \left\lceil \frac{C}{M} \right\rceil$$

wherein the C and N are in units of bits, or the C and N are in units of symbols, and $\lceil \ \rceil$ is a round-up operation.

**33.** The device for sending information according to claim 32, wherein the receiving unit is specifically configured to: externally receive a resource allocation message, wherein the resource allocation message is used to configure a time-frequency resource occupied by each group of the M groups of information streams to be sent.

**34.** The device for sending information according to claim 33, wherein the resource allocation message comprises at least one of the following items:

> the number of the groups M;
> the group size N;
> a length of a time domain of the time-frequency resource occupied by each group;
> the number of resource blocks RBs and a modulation and coding scheme MCS; and
> the number of RBs and a transport block size TBS.

**35.** The device for sending information according to claim 24, wherein the receiving unit is specifically configured to: receive acknowledgment information sent by a base station after a first group of the M groups of information streams to be sent is successfully sent, wherein the acknowledgment information is used to instruct that a current channel continues to be occupied in subsequent transmission.

**36.** The device for sending information according to claim 24, wherein the receiving unit is further configured to:

> receive feedback for the M groups of information streams to be sent; or,
> receive feedback for each group of information streams to be sent.

**37.** A device for receiving information, comprising:

> a receiving unit, configured to receive M groups of symbol streams separately over M different time-frequency resources, wherein the number of symbols in each time-frequency resource of the M different time-frequency resources is greater than 4, and the M is an integer greater than 1; and
> a processing unit, configured to process the M groups of symbol streams to obtain an original information stream.

**38.** The device for receiving information according to claim 37, wherein the device for receiving information further comprises a demodulation unit and a decoding unit, and the processing unit is specifically configured to:

> separately demodulate, by using the demodulation unit, the M groups of symbol streams to obtain M groups of bit streams, wherein a length of the bit streams is C, and a length of each group of bit streams is N;
> merge the M groups of bit streams into a bit stream to be decoded;
> decode, by using the decoding unit, the bit stream to be decoded to obtain the original information stream, wherein the decoding comprises Turbo code decoding or convolutional code decoding; and
> check the original information stream.

**39.** The device for receiving information according to claim 37, wherein the device for receiving information further comprises a demodulation unit and a decoding unit, and the processing unit is specifically configured to:

> merge the M groups of symbol streams into a symbol stream to be demodulated, wherein a length of the symbol stream to be demodulated is C, and a length of each group of symbol streams is N;
> demodulate, by using the demodulation unit, the symbol stream to be demodulated to obtain a bit stream to be decoded;
> decode, by using the decoding unit, the bit stream to be decoded to obtain the original information stream, wherein the decoding comprises Turbo code decoding or convolutional code decoding; and
> check the original information stream.

**40.** The device for receiving information according to claim 37, wherein the device for receiving information further comprises a demodulation unit and a decoding unit, and the processing unit is specifically configured to:

> separately demodulate, by using the demodulation unit, the M groups of symbol streams to obtain M groups of bit streams to be decoded;
> separately perform, by using the decoding unit, linear block code decoding on the M groups of bit streams to be decoded to obtain M groups of bit streams;

merge the M groups of bit streams into the original information stream, wherein a length of the original information stream is C, and a length of each group of bit streams is N; and
check the original information stream.

**41.** The device for receiving information according to any one of claims 38 to 39, wherein the checking the original information stream comprises: cyclic redundancy check or high-level check information check; and
the decoding further comprises: linear block code decoding.

**42.** The device for receiving information according to any one of claims 37 to 40, wherein the device for receiving information further comprises a determining unit, wherein the determining unit is specifically configured to:

determine the M according to the N and the C, or determine the N according to the M and the C:

$$M = \left\lceil \frac{C}{N} \right\rceil \text{ or } N = \left\lceil \frac{C}{M} \right\rceil$$

wherein the C and N are in units of bits, or the C and N are in units of symbols, N is an integer greater than 1 or equal to 1, and $\lceil \, \rceil$ is a round-up operation.

**43.** The device for receiving information according to claim 42, wherein the device for receiving information further comprises a sending unit, configured to: determine a resource allocation message by using the determining unit and send the resource allocation message, wherein the resource allocation message is used to configure a time-frequency resource occupied by each group of the M groups of symbol streams.

**44.** The device for receiving information according to claim 43, wherein the resource allocation message comprises at least one of the following items:

the number of the groups M;
the group size N;
a length of a time domain of the time-frequency resource occupied by each group;
the number of resource blocks RBs and a modulation and coding scheme MCS; and
the number of RBs and a transport block size TBS.

**45.** The device for receiving information according to claim 37, wherein the sending unit is further configured to: send acknowledgment information to a user equipment after a first group of the M groups of symbol streams is successfully received, wherein the acknowledgment information is used to instruct that a current channel continues to be occupied in subsequent transmission.

**46.** The device for receiving information according to claim 37, wherein the sending unit is further configured to:

send feedback for the M groups of symbol streams; or
send feedback for each group of symbol streams.

Determine the number of groups M and/or a group size N, where the M is an integer greater than 1, and the N is an integer greater than 1 or equal to 1 — 101

Process, according to M and/or N, an information stream to be grouped to obtain M groups of information streams to be sent — 102

Separately send the M groups of information streams to be sent over M different time-frequency resources, where the number of symbols in each time-frequency resource of the M different time-frequency resources is greater than 4 — 103

FIG. 1

201. Add CRC

202. Encode

203. Group

204. Modulate

205. Send

206. Feed back information

FIG. 2

301. Add CRC

↓

302. Encode

↓

303. Modulate

↓

304. Group

↓

305. Send

↓

306. Feed back information

FIG. 3

401. Group

↓

402. Encode

↓

403. Modulate

↓

404. Send

↓

405. Feed back information

FIG. 4

Receive M groups of symbol streams separately over M different time-frequency resources, where the number of symbols in each time-frequency resource of the M different time-frequency resources is greater than 4, and M is an integer greater than 1 — 501

Process the M groups of symbol streams to obtain an original information stream — 502

FIG. 5

Device 600 for sending information

Determining unit 601

Processing unit 602

Sending unit 603

Encoding unit 604

Modulation unit 605

Receiving unit 606

FIG. 6

Device 700 for receiving information

Receiving unit 701

Processing unit 702

Demodulating unit 703

Decoding unit 704

Determining unit 705

Sending unit 706

FIG. 7

Antenna
806

800

Transmitting circuit
804

Receiving circuit
805

Processor
801

803

Memory
802

FIG. 8

FIG. 9

# INTERNATIONAL SEARCH REPORT

| International application No. |
|---|
| **PCT/CN2013/070721** |

## A. CLASSIFICATION OF SUBJECT MATTER

H04W 72/04 (2009.01) i

According to International Patent Classification (IPC) or to both national classification and IPC

## B. FIELDS SEARCHED

Minimum documentation searched (classification system followed by classification symbols)

IPC: H04W; H04L

Documentation searched other than minimum documentation to the extent that such documents are included in the fields searched

Electronic data base consulted during the international search (name of data base and, where practicable, search terms used)

VEN, CPRSABS, CNTXT, CNKI: length, symbol, group, count, number, data, information, massage, signal, streaming, flowing, time w frequency, resource, send+, receiv+, transmi+, map+

## C. DOCUMENTS CONSIDERED TO BE RELEVANT

| Category* | Citation of document, with indication, where appropriate, of the relevant passages | Relevant to claim No. |
|---|---|---|
| X | CN 101291313 A (HUAWEI TECHNOLOGIES CO., LTD.), 22 October 2008 (22.10.2008), claims 22-23, and description, page 8, lines 16-20 | 14, 22-23, 37, 45-46 |
| Y | | 1, 8, 10-13, 24, 31, 35-36 |
| Y | CN 102215571 A (ALCATEL-LUCENT SHANGHAI BELL CO., LTD.), 12 October 2011 (12.10.2011), claim 1 | 1, 8, 10-13, 24, 31, 35-36 |
| A | CN 101867550 A (TSINGHUA UNIVERSITY), 20 October 2010 (20.10.2010), the whole document | 1-46 |
| A | CN 102412867 A (TSINGHUA UNIVERSITY), 11 April 2012 (11.04.2012), the whole document | 1-46 |

☐ Further documents are listed in the continuation of Box C.     ☒ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 October 2013 (08.10.2013) | **24 October 2013 (24.10.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **WANG, Guixia** Telephone No.: (86-10) **62411262** |
|---|---|

Form PCT/ISA/210 (second sheet) (July 2009)

## INTERNATIONAL SEARCH REPORT
### Information on patent family members

| | International application No. |
|---|---|
| | **PCT/CN2013/070721** |

| Patent Documents referred in the Report | Publication Date | Patent Family | Publication Date |
|---|---|---|---|
| CN 101291313 A | 22.10.2008 | CN 101291313 B | 11.01.2012 |
| CN 102215571 A | 12.10.2011 | None | |
| CN 101867550 A | 20.10.2010 | CN 101867550 B | 20.03.2013 |
| CN 102412867 A | 11.04.2012 | None | |

Form PCT/ISA/210 (patent family annex) (July 2009)